# FASCICULE DE BREVET EUROPEEN

(11) **EP 2 547 938 B1**
(45) Date de publication et mention de la délivrance du brevet: **08.01.2014**
(21) Numéro de dépôt: 11705942.8
(22) Date de dépôt: 28.01.2011
(51) Int. Cl.: F16L 1/19, F16L 1/20, F16L 1/235

(54) **PROCEDE DE DEPOSE D'UNE LIGNE SOUS-MARINE AU FOND DE LA MER**
VERFAHREN ZUM VERLEGEN EINES UNTERWASSERKABELS AUF DEM MEERESGRUND
METHOD FOR LAYING A SUBMARINE LINE ON THE SEABED

(30) Priorité: 18.03.2010 FR 1051937
(43) Date de publication de la demande: 23.01.2013
(73) Titulaire: Saipem SA, 78180 Montigny-le-Bretonneux (FR)
(72) Inventeur: PIONETTI, François-Régis, F-50450 La Baleine (FR); SZYSZKA, Damien, F-92130 Issy Les Moulineaux (FR); CHEVERRY, Hubert, F-78120 Rambouillet (FR)
(74) Mandataire: Domange, Maxime
(86) Numéro de dépôt international: PCT/FR2011/050177
(87) Numéro de publication internationale: WO 2011/114027

(56) Documents cités:
- FR-A1- 2 916 795
- US-A- 3 698 199
- US-A- 3 955 599
- US-A- 4 065 822
- US-A- 5 380 129

## Description

La présente invention concerne un procédé de dépose d'une ligne sous-marine au fond de la mer depuis la surface.

On entend ici par « ligne sous-marine » aussi bien des conduites destinées à reposer au fond de la mer, qu'il s'agisse de conduites flexibles ou conduites rigides, que des câbles électriques et/ou divers ombilicaux nécessaires à l'exploitation d'installations sous-marines.

Plus particulièrement, la présente invention concerne procédé de dépose au fond de la mer depuis un navire de pose en surface, d'une conduite sous-marine, notamment une conduite sous-marine assurant la liaison entre deux têtes de puits ou entre une tête de puits et une conduite de liaison fond-surface reliée à un support flottant. On entend ci-après par « conduite sous-marine », une conduite reposant au fond de la mer ou une telle conduite en position verticale suspendue depuis la surface, notamment depuis un navire de pose en surface ou encore une telle conduite, dont la partie inférieure présente une courbure en J.

Le terme « dépose » se réfère ici à une dépose au fond de la mer au sens de « descendre depuis la surface et poser au fond de la mer ».

Le secteur technique de l'invention est le domaine de la fabrication et de l'installation de conduites sous-marines de production pour l'extraction sous-marine de pétrole, de gaz ou autre matériau soluble ou fusible, ou d'une suspension de matière minérale, à partir de tête de puits immergé pour le développement de champs de production installés en pleine mer au large des côtes, ou encore de conduites sous-marines d'injection d'eau ou de gaz. L'application principale et immédiate de l'invention étant dans le domaine de la production pétrolière, ainsi que dans la ré-injection d'eau et la production ou ré-injection de gaz.

La pose de conduites sous-marines en mer ultra profonde s'effectue en général à partir d'un navire d'installation à positionnement dynamique équipé d'une tour de pose en J. Cette tour est en général en position sensiblement verticale et possède à sa partie basse un dispositif de préhension de la conduite laquelle s'étend depuis le navire de pose jusqu'au fond de la mer où la conduite se courbe naturellement pour prendre une position finale horizontale lorsqu'elle repose sur ledit fond de la mer, la forme de la courbe représentant un J. Un tel navire est décrit notamment dans le brevet WO-2000-66923.

Ainsi, durant la pose, la conduite est maintenue fermement en partie basse de ladite tour de pose en J, tandis qu'une nouvelle rame de 24 ou 48m de longueur, est installée en position horizontale sur une poutre articulée au niveau de la structure de ladite tour. Ladite poutre est alors relevée vers une position sensiblement verticale au moyen de vérins hydrauliques, puis ladite rame est descendue vers l'extrémité supérieure de la conduite maintenue en suspension, pour être positionnée avec précision et enfin soudée. Lorsque la soudure est terminée et testée, la conduite est protégée contre la corrosion, puis la partie supérieure de la rame est maintenue au sein de ladite tour par un dispositif de préhension solidaire d'un chariot. Le dispositif de retenue en pied de tour est alors relâché et ledit chariot est déplacé vers le bas de la tour, sur une hauteur correspondant à la longueur de ladite rame. Simultanément, le navire est déplacé vers l'avant d'une longueur correspondant à la longueur de la rame ainsi descendue, de manière à conserver la même forme de la courbe en J durant toute l'opération de pose. Enfin, le dispositif de retenue en pied de tour est reverrouillé, et le chariot libéré est remonté vers le haut de la tour. Le cycle recommence alors avec une nouvelle rame.

Lors du démarrage d'une pose de conduite sous-marine, on assemble des rames successives jusqu'à atteindre un niveau situé à 10-20m au dessus du fond de la mer. La conduite est alors en position verticale. Puis, on relie l'extrémité de ladite conduite à un point fixe au fond de la mer, par exemple une ancre, ou encore une pile enfoncée dans le fond de la mer, à l'aide d'un câble ou d'une élingue, la mise en place étant assurée par un ROV, sous-marin automatique piloté depuis la surface et équipé d'un bras manipulateur. Le navire avance alors tout en continuant l'assemblage de nouvelles rames et la forme de ladite courbe en J une fois atteinte, l'extrémité inférieure de la conduite repose sur le fond et la progression de l'installation se poursuit de manière continue en conservant la forme de la courbe en J, c'est à dire en avançant le navire d'une longueur correspondant exactement à la longueur de la rame qui vient d'être installée.

Le principal inconvénient de cette méthode est que lorsque la conduite est complètement installée, c'est-à-dire déposée sur le sol marin, la conduite ainsi que le câble de liaison et son ancrage sont sous une contrainte de traction élevée. Et, dès que l'on sectionne ou déconnecte le câble de liaison, l'extrémité de la conduite se rétracte sur une longueur variable, en fonction des caractéristiques du sol et de la conduite. On est alors obligé de préparer des conduites de jonction spécifiques, en général de grande longueur, pour leur conférer une souplesse suffisante, de manière à effectuer la jonction avec une tête de puits, ou avec l'extrémité inférieure d'une conduite de liaison fond-surface. Une telle conduite de jonction est décrite notamment dans la demande de brevet FR-08-58214 et la demande Internationale PCT/FR2009/052298 de la demanderesse. Une telle liaison fond-surface est décrite notamment dans le brevet WO-00-49267 et de nombreux autres brevets au nom de la demanderesse.

En général, à l'extrémité de la conduite sous-marine correspondant à la fin de la pose, c'est-à-dire l'extrémité supérieure de la dernière rame, on est obligé d'installer une telle conduite de jonction. En revanche, à l'extrémité correspondant au démarrage de la pose, c'est-à-dire à l'extrémité inférieure de la première rame au fond de la mer, on cherche à éviter d'avoir à ajouter une conduite de jonction en rendant l'extrémité de ladite conduite sous-marine directement solidaire d'une structure d'ancrage, ce qui permet de positionner avec précision ladite extrémité de conduite sous-marine, cette dernière étant en général équipée d'un connecteur automatique (mâle / femelle) qui se retrouvera donc en position, prêt à être connecté à l'extrémité d'une deuxième conduite équipée de la partie correspondante (femelle / mâle) dudit connecteur automatique, notamment l'extrémité d'une conduite coudée intégrée à une structure d'ancrage. De nombreuses tentatives ont été réalisées, mais elles se heurtent toutes au problème de la formation préalable, dans de bonnes conditions de sécurité, d'une courbure initiale en 1, ladite courbure devant être parfaitement contrôlée. En effet, en cas de dépassement d'une courbure limite liée à la taille de la conduite et à la limite élastique de l'acier, la conduite serait irrémédiablement pliée, le phénomène de pliage étant en général brutal et rendant inutilisable la longueur déjà assemblée. En effet, la pose en J n'est pas un procédé réversible et c'est toute la conduite, dont l'extrémité inférieure est endommagée, qui doit être alors déconnectée du navire et abandonnée au fond de la mer.

Plus particulièrement, en général, on descend verticalement la conduite au plus près de ladite structure d'ancrage, par exemple à 3-5m, puis, on connecte une élingue courte, de quelques mètres, voire 5-10m, entre ladite extrémité inférieure de la conduite et la structure d'ancrage. Puis, en déplaçant le navire de pose, tout en continuant l'assemblage de rames supplémentaires, on forme la courbure en J et l'on dépose enfin l'extrémité de ladite conduite sur un support solidaire de la structure d'ancrage, des éléments de guidage étant intégrés audit support de manière à diriger le connecteur à l'extrémité de la conduite vers sa position finale, qui doit être très précise. Le principal problème est que dans la phase d'approche, quand la conduite est verticale, ou même lorsqu'elle présente un début de courbure, tous les mouvements du navire en surface sont plus ou moins répercutés au fond de la mer au niveau de l'extrémité inférieure de la conduite. Et, les mouvements de pilonnement sont quant à eux intégralement répercutés. Il en résulte, en raison de la faible longueur du câble de liaison ou de l'élingue que l'extrémité inférieure de la conduite risque à ce stade de heurter la structure support réceptrice, endommageant alors le connecteur automatique qui est un composant mécanique complexe, de grande précision et extrêmement coûteux. En cas d'endommagement, la conduite sous-marine complète serait là encore perdue et devrait être déconnectée du navire et abandonnée sur le fond. En revanche, dès lors que la courbe en J est correctement formée, le problème est différent, car les mouvements de pilonnement du navire ne se répercutent plus directement jusqu'à l'extrémité de la conduite. En effet, la majeure partie du pilonnement induit seulement une variation de la courbure de la partie basse de la conduite, principalement dans la zone correspondant au pied du J. De ce fait, les risques de collision sont alors largement réduits, voire inexistants.

Dans certains documents, notamment US 5 380 129 et US 3 698 199, il est décrit un dispositif de courbure d'une conduite à l'aide de treuils et de câbles, lesdits treuils étant montés à bord d'un navire ou d'une plateforme reposant sur le fond de la mer. Ces dispositifs de courbure ne sont pas aptes à contrôler automatiquement la diminution de la longueur du câble et donc à contrôler automatiquement la courbure de la conduite.

Dans US 4 065 822, on décrit une limitation de la courbure d'une conduite à l'aide de chaînes s'étendant entre deux points de la conduite, mais aucun moyen de tensionnement, contrôle et déplacement de la conduite courbe ne sont décrits, ni suggérés.

Dans US 3 955 599, un dispositif de courbure de conduite comprend une pluralité de segments annulaires connectés de façon articulée les uns aux autres, à travers lesquels passe la conduite, les deux segments d'extrémité étant reliés entre eux par un vérin. Un tel type de dispositif de courbure est approprié pour créer une courbure sur une courte longueur de conduite et plus particulièrement créer un coude entre deux fractions de conduite rectiligne, mais un tel dispositif ne permet pas de contrôler automatiquement une courbure de plus grand rayon de courbure résultant du simple déplacement de l'extrémité inférieure de la conduite. En outre, le dispositif de courbure décrit dans US 3 955 599, requiert l'installation de composants mécaniques relativement coûteux et complexes à installer.

Ainsi, le but de la présente invention est de fournir de nouveaux procédé et dispositif plus simples, plus fiables, et qui surmontent les inconvénients, problèmes exposés ci-dessus, pour réaliser l'installation et la pose en mer de conduites sous-marines destinées à reposer au fond de la mer et dont l'extrémité inférieure équipée d'un connecteur automatique doit être raccordée à un élément complémentaire de connecteur automatique d'un élément ou d'une structure ancrée au fond de la mer.

Pour ce faire, la présente invention consiste essentiellement à créer une pré-courbure initiale de la partie inférieure de ladite conduite sous-marine en cours de pose, déposée en position sensiblement verticale ou légèrement inclinée depuis une tour de pose en J d'un navire de pose, en vue de déposer et positionner plus précisément son extrémité inférieure au fond de la mer et notamment de positionner avec précision sur une structure de support et d'accueil ancrée au fond de la mer pour effectuer la connexion d'un connecteur automatique à l'extrémité de ladite conduite sous-marine à un connecteur automatique complémentaire à l'extrémité d'une seconde conduite ou d'une conduite de jonction, de préférence une conduite coudée, solidaire de ladite structure de support de guidage ancrée au fond de la mer.

Plus précisément, la présente invention fournit un procédé de dépose d'une ligne sous-marine au fond de la mer depuis la surface, pour en connecter l'extrémité inférieure à un élément de raccordement au fond de la mer, caractérisé en ce que l'on réalise les étapes dans lesquelles :
1) on positionne ladite ligne sous-marine suspendue depuis la surface en position sensiblement verticale, son extrémité inférieure étant située à une hauteur H0 au dessus du fond de la mer, ladite ligne sous-marine comprenant dans sa partie inférieure un dispositif de courbure d'une première portion de ligne sous-marine s'étendant entre deux points de ladite ligne sous-marine dénommés points de fixation ou guidage, ledit dispositif de courbure comprenant au moins un câble et des moyens de tensionnement dudit câble entre lesdits deux points de fixation ou guidage au niveau desquels ladite ligne sous-marine est solidaire dudit câble par fixation ou respectivement par guidage, lesdits moyens de tensionnement étant aptes à rapprocher les deux dits points de fixation ou de guidage en diminuant la longueur de câble s'étendant entre les deux dits points de fixation ou guidage, depuis une longueur maximale L0 jusqu'à une valeur limite inférieure donnée L1, ledit câble ou les dits moyens de tensionnement comprenant ou coopérant avec au moins un moyen de blocage apte à empêcher la diminution de la longueur du câble tendu entre les dits deux points de fixation ou guidage en dessous d'une dite valeur limite inférieure donnée L1, lesdits deux points de fixation ou guidage étant espacés d'une longueur maximale L0 lorsque ladite première portion de ligne sous-marine est en position rectiligne, et
2) l'extrémité inférieure de ladite ligne sous-marine est déplacée, de préférence à l'aide d'un robot sous-marin piloté de préférence encore du type ROV, de manière à ce que l'extrémité inférieure de ladite ligne sous-marine s'écarte de sa position initiale de l'étape 1) dans laquelle ladite ligne était en position verticale, lesdits moyens de tensionnement créant une courbure contrôlée de ladite première portion de ligne sous-marine par dit rapprochement des deux dits points de fixation ou guidage, ladite courbure de la première portion de ligne sous-marine étant limitée du fait que la diminution de la longueur de la corde formée par le câble tendu entre les dits deux points de fixation ou guidage ne peut pas diminuer en dessous de ladite valeur limite inférieure donnée L1, et
3) si nécessaire, on déplace ladite ligne sous-marine, dont la première portion comprend une dite forme courbe en la rapprochant du fond de la mer, concomitamment à la descente additionnelle de dite ligne, depuis la surface, puis
4) on finalise le positionnement de ladite extrémité inférieure de la ligne, au regard dudit élément de raccordement au fond de la mer, et on réalise la connexion de l'extrémité inférieure de ladite ligne au dit élément de raccordement.

On comprend que :
- à l'étape 1), lesdits moyens de tensionnement sont aptes à rapprocher les deux dits points de fixation et de guidage lorsque l'extrémité inférieure de la ligne sous-marine est déplacée, et
- à l'étape 2), lesdits moyens de tensionnement sont actionnés automatiquement de manière à créer une dite courbure contrôlée lorsque l'extrémité inférieure de la ligne sous-marine est déplacée comme décrit précédemment.

Plus particulièrement, chacun des deux dits points de fixation ou guidage est :
- soit un point de fixation auquel une extrémité du câble ou un dit moyen de tensionnement est fixé(e) sur ladite ligne sous-marine, ladite extrémité du câble étant fixée sur ladite ligne directement ou par l'intermédiaire d'un dit moyen de tensionnement,
- soit respectivement, un point de guidage du câble sur ladite ligne, l'extrémité dudit câble la plus proche dudit point de guidage étant fixée à un dit moyen de tensionnement.

Le procédé selon l'invention permet de préformer la partie inférieure de la ligne sous-marine selon une courbure prédéfinie en vue d'effectuer plus facilement ladite dépose et connexion à un élément de raccordement au fond de la mer, car ladite courbure permet de réduire très fortement la répercussion des mouvements de pilonnement du navire de pose en surface au niveau de l'extrémité inférieure de ladite ligne sous-marine, en diminuant ainsi les risques de chocs et d'endommagement au niveau dudit élément de raccordement au fond de la mer et de l'extrémité inférieure de ladite ligne. La dépose et connexion de la ligne sous-marine au fond de la mer sont aussi rendues plus aisées du fait que la portion terminale entre l'extrémité inférieure de la ligne et ladite première portion de ligne incurvée n'est pas tensionnée, de sorte que l'on peut la manoeuvrer relativement aisément, en particulier lors des étapes 3) et 4) du procédé.

A l'étape 2), on comprend que :
- les dits éléments de tensionnement sont au moins aptes à surmonter la raideur de ladite ligne pour engendrer ladite courbure ; et
- la corde formée par le câble par rapport à l'arc de la portion de ligne sous-marine courbe entre les deux points de fixation et de guidage présente une longueur qui diminue jusqu'à la valeur limite L1, au fur et à mesure qu'augmente la courbure de l'arc ainsi que la distance D entre ladite extrémité inférieure de conduite et sa position initiale de l'étape 1) lorsque ladite ligne était en position verticale.

Plus particulièrement, lesdits moyens de tensionnement comprennent l'un au moins des 3 moyens de tensionnement suivants :
a) un corps-mort ou un élément de flottabilité fixé ou relié à une extrémité dudit câble, ledit câble étant dans ce cas guidé entre ses deux extrémités par des moyens de guidage solidaires de ladite ligne au niveau d'un des deux dits points de fixation ou guidage, qui est un point de guidage dudit câble sur ladite ligne, l'autre extrémité dudit câble étant fixée ou reliée à l'autre point de fixation ou de guidage, qui est un point de fixation, et de préférence ledit câble comprenant un dit moyen de blocage constitué d'un taquet bloqueur solidaire du câble, ledit taquet bloqueur ne pouvant pas passer à travers au moins un des dits moyens de guidage, et
b) un treuil fixé ou relié à la ligne sous-marine à au moins un des deux dits points de fixation ou guidage, treuil sur lequel ledit câble peut être enroulé depuis au moins une de ses extrémités à laquelle il est fixé au treuil, et de préférence ledit câble comprenant un dit moyen de blocage constitué d'un taquet bloqueur solidaire du câble empêchant l'enroulement supplémentaire du câble autour dudit treuil, et
c) un vérin fixé ou relié à la ligne sous-marine à au moins un des deux dits points de fixation ou de guidage, comprenant une tige de vérin dont une extrémité est fixée ou reliée à au moins une extrémité dudit câble, de préférence ladite tige de vérin ne pouvant se déplacer que d'une distance maximale égale à L0-L1.

Plus particulièrement, ledit treuil ou dit vérin peut être fixé sur ladite ligne sous-marine à un dit point de fixation, ou ledit treuil ou vérin peut être fixé ailleurs que sur ladite ligne, auquel cas il est relié par ledit câble à un dit point de guidage du câble sur ladite ligne.

Lorsque ledit moyen de tensionnement est un treuil ou un vérin, auquel une extrémité du câble est fixée, l'autre extrémité du câble est de préférence fixée ou reliée à un dit point de fixation.

Plus particulièrement encore, le procédé comporte des caractéristiques selon lesquelles :
- ledit câble est fixé à une extrémité à un gousset solidaire de ladite ligne au niveau d'un dit point de fixation délimitant ladite première portion et la portion terminale de partie inférieure de ligne sous-marine, et ledit câble passe entre ces deux extrémités par des moyens de guidage de câble solidaires de ladite ligne sous-marine au niveau d'un point de guidage sur ladite ligne sous-marine, l'autre extrémité dudit câble coopérant avec des éléments de tensionnement comprenant un élément de flottabilité ou un poids ou corps mort, exerçant à ladite autre extrémité une tension d'intensité P, et
- à l'étape 2), on déplace l'extrémité inférieure de ladite ligne sous-marine, de manière à créer une courbure contrôlée de la première portion de ligne sous-marine comprise entre ledit point de fixation sur la ligne et ledit point de guidage sur la ligne du fait que :
   - lesdits éléments de tensionnement exercent une tension P d'intensité apte à tendre ledit câble et engendrer une courbure de ladite première portion de ligne sous-marine, lorsque l'extrémité inférieure de ladite ligne sous-marine est écartée de sa position initiale de l'étape 1) dans laquelle ladite ligne était en position verticale, et
   - ledit câble comprend ou coopère avec un moyen de blocage empêchant la diminution de la longueur de ladite corde formée par le câble tendu entre le point de fixation et ledit point de guidage, en dessous d'une valeur limite donnée de longueur L1, limitant ainsi la courbure de ladite première portion de ligne entre le point de fixation et ledit point de guidage résultant dudit tensionnement.

On comprend que ledit point de fixation est situé à une distance L2 de l'extrémité inférieure de la ligne sous-marine lorsque la portion terminale de la ligne sous-marine s'étendant entre ladite extrémité inférieure et ledit point de fixation sur la ligne est rectiligne.

On comprend que ledit point de guidage est situé à une distance L0 dudit point de fixation lorsque la première portion de la ligne sous-marine s'étendant entre ledit point de guidage et ledit point de fixation est rectiligne.

Dans un mode préféré de réalisation, le procédé selon l'invention comprend les caractéristiques selon lesquelles :
- ladite ligne sous-marine est une conduite sous-marine en acier constituée de rames assemblées les unes aux autres bout à bout par soudage en position dans une tour de pose d'un navire de pose en surface à partir duquel on réalise la dépose de ladite conduite sous-marine au fond de la mer, et
- à l'étape 2), on déplace l'extrémité inférieure de ladite ligne sous-marine à l'aide d'un robot sous-marin piloté, de préférence encore du type ROV,
- ladite courbure de ladite première portion de conduite sous-marine entre les deux dits points de fixation ou guidage étant limitée de telle sorte que le rayon de courbure de ladite conduite reste supérieur à une valeur limite correspondant à une contrainte maximale inférieure à la limite élastique, de préférence inférieure à 90%, de préférence encore inférieure à 70% de la limite élastique de l'acier de ladite première portion de conduite, de préférence ladite courbure étant telle que l'angle α₂ de la tangente D2 de la conduite au niveau dudit point de fixation est inférieur à 45°, de préférence inférieur à 30°, et
- à l'étape 3), on déplace ladite conduite sous-marine dont ladite première portion comprend une forme courbe en rapprochant ledit navire de pose dudit élément de raccordement au fond de la mer, si nécessaire concomitamment à la descente additionnelle de dite conduite sous-marine depuis le navire de pose en surface, et
- à l'étape 4), on finalise le positionnement de ladite extrémité inférieure de la conduite, au regard dudit élément de raccordement situé à l'extrémité d'une autre conduite supportée par une structure ancrée au fond de la mer, et on réalise la connexion dudit élément de raccordement du type connecteur automatique à un élément de raccordement complémentaire de connecteur automatique situé à l'extrémité inférieure de ladite conduite.

Plus particulièrement, le rayon de courbure minimal de ladite première portion de conduite sous-marine entre les deux dits points de fixation ou guidage est compris entre 200 et 650 fois le diamètre extérieur de ladite conduite, de préférence compris entre 225 et 450 fois le diamètre extérieur de ladite conduite.

Plus particulièrement, la conduite comprend les caractéristiques selon lesquelles :
- lesdites rames sont assemblées par soudage bout à bout de 2 à 4 éléments unitaires de conduites de chacun 5 à 15 m, avec des diamètres extérieurs de conduites de 50mm à 600mm (2 à 24 pouces),
- la longueur L2 de la portion terminale de conduite correspond à une longueur de 1 à 10 éléments unitaires de conduite mis bout à bout rectilignement, de préférence une longueur L2 de 5 à 100m, de préférence encore de pas plus de 1 rame, et
- la longueur L0 de ladite première portion de conduite en position rectiligne, est d'une longueur de 150 à 1000 fois, de préférence 175 à 700 fois le diamètre extérieur de la conduite, correspondant à 1/5 à 1/2 de la profondeur du sol sous-marin, celle-ci étant d'au moins 1000m, de préférence au moins 1500m, et de préférence encore, L0 correspondant à la longueur de 2 à 20 rames mises bout à bout rectilignement, en particulier L0 est de 25 à 750 m.

Plus particulièrement encore, dans un mode de réalisation :
- lesdits moyens de guidage comprennent au moins une poulie, dont l'axe est solidaire de ladite conduite, et
- ledit moyen de blocage est constitué par un taquet bloqueur solidaire du câble situé à une longueur L1 dudit point de fixation lorsque la conduite est rectiligne, de préférence telle que la différence de longueur L0-L1 soit inférieure ou égale à 25% de ladite longueur L0, de préférence inférieure à 10% de ladite longueur L0. En pratique, la longueur L0-L1 peut être plus particulièrement de 5 à 100m.

Dans un mode préféré de réalisation, ladite conduite comprend ou coopère avec des premiers éléments de flottabilité au niveau de ladite portion terminale de conduite entre un dit point de fixation ou guidage et l'extrémité inférieure de la conduite de manière à compenser au moins le poids propre apparent dans l'eau de ladite portion terminale de conduite, de préférence lesdits premiers éléments de flottabilité répartis le long de ladite portion terminale uniformément, de sorte que de préférence encore, l'angle α₁ de la tangente D1 à ladite conduite au niveau de son extrémité inférieure soit inférieur à 45°, de préférence encore inférieur à 30°.

Ces éléments de flottabilité facilitent la manipulation par ROV de ladite partie inférieure de conduite et le déplacement de l'extrémité inférieure de conduite aux étapes 2) et 3) et permettent de mettre en oeuvre le cas échéant un élément de tensionnement créant une intensité réduite de tension P.

Dans un mode préféré de réalisation, ladite conduite comprend ou coopère avec des premiers éléments de flottabilité au niveau de ladite portion terminale de conduite, de manière à ne compenser essentiellement seulement que le poids propre apparent dans l'eau de ladite portion terminale de conduite et dudit connecteur automatique.

Dans ce mode de réalisation, ladite portion terminale de conduite entre ledit point d'accroche et l'extrémité inférieure de la conduite reste positionnée rectilignement dans la mesure où lesdits éléments de flottabilité ne sont pas suffisants pour vaincre la raideur de la conduite et engendrer une courbure de ladite portion terminale de conduite.

De préférence encore, ladite conduite comprend ou coopère en outre avec des éléments de flottabilité additionnels aptes à créer une flottabilité positive d'une partie de ladite partie inférieure de conduite, ladite flottabilité positive F n'étant pas capable à elle seule d'engendrer la courbure de ladite première portion de conduite en l'absence de dit tensionnement P du câble à l'aide desdits moyens de tensionnement, ou d'augmenter ladite courbure en présence de dit tensionnement P à l'aide desdits moyens de tensionnement.

Cette flottabilité positive facilite encore davantage la courbure de ladite portion inférieure de conduite et le déplacement de l'extrémité inférieure de conduite aux étapes 2) à 4) et permet en outre de mettre en oeuvre un élément de tensionnement créant une intensité réduite de tension P, et ce sans risquer que la courbure n'augmente et que la contrainte de limite élastique ne soit dépassée en dépit du fait que l'augmentation de courbure soit empêchée par lesdits moyens de blocage.

Plus particulièrement, la conduite comprend des dits éléments de flottabilité additionnels aptes à créer une flottabilité positive répartis le long d'une partie de longueur de ladite première portion de conduite s'étendant à partir dudit point de fixation ou de guidage délimitant lesdites premières portions et dites portions terminales de conduite, ladite flottabilité positive n'étant pas capable à elle seule d'engendrer ou d'augmenter la courbure de ladite première portion de conduite en l'absence ou respectivement en présence dudit tensionnement P du câble au niveau dudit point de guidage.

Dans une variante de réalisation, ladite conduite comprend ou coopère en outre avec un deuxième élément de flottabilité additionnel coopérant avec l'extrémité inférieure de la conduite apte à créer une flottabilité positive de la portion terminale de conduite en combinaison avec des premiers éléments de flottabilité s'étendant sensiblement sur toute la longueur de la portion terminale de conduite, ladite flottabilité positive étant capable à elle seule d'engendrer une courbure de ladite portion terminale de conduite de sorte que, de préférence l'angle α₁ de la tangente D1 à ladite conduite au niveau de son extrémité inférieure 1c soit inférieur à 45°, de préférence encore inférieur à 30°, mais ladite flottabilité positive, n'étant pas capable à elle seule d'engendrer ou d'augmenter la courbure de ladite première portion de conduite en l'absence de dit tensionnement P du câble au niveau dudit point de guidage.

De façon connue, lesdits éléments de flottabilité sont constitués par des éléments de flottabilité périphériques et coaxiaux se présentant sous forme de bouées de préférence régulièrement espacées les unes des autres.

Dans un mode de réalisation avantageux, après l'étape 4) on poursuit la dépose de la conduite au fond de la mer en réalisant les étapes supplémentaires suivantes dans lesquelles :
5) on éloigne progressivement le navire de pose de ladite structure ancrée au fond de la mer, d'une longueur supérieure à la longueur de chaque rame additionnelle que l'on descend au niveau de la tour de pose, de préférence d'une longueur de 150% de la longueur de dite rame additionnelle, de manière à créer une inclinaison de la conduite en surface d'un angle ß de pas plus de 10° par rapport à sa position préalable verticale en fin d'étape 3) ,puis
6) on continue la descente de nouvelles rames additionnelles et le déplacement simultanée du navire en l'éloignant de ladite structure ancrée au fond de la mer, d'une longueur sensiblement égale à la longueur de chaque dite rame additionnelle, que l'on descend de manière à conserver une dite inclinaison de la conduite en surface sensiblement d'un même dit angle ß de pas plus de 10°.

Cette inclinaison d'un angle ß en surface est avantageuse, car elle permet que ladite ligne sous-marine suspendue adopte ou se rapproche plus facilement d'une dite courbure en forme géométrique de chaînette, qui est la courbure adoptée naturellement par une conduite en suspension depuis la surface lorsque son extrémité inférieure repose horizontalement à plat au fond de la mer.

Ce mode de réalisation est particulièrement avantageux en ce qu'il facilite encore davantage le positionnement final et la connexion de l'extrémité inférieure de la conduite aux étapes 3) et 4).

De façon avantageuse, dans un procédé selon l'invention, on met en oeuvre un dit moyen de tensionnement qui est un corps mort ou poids de forme profilée fixé à une extrémité dudit câble, de préférence de forme conique, dans sa partie inférieure de manière à permettre qu'elle puisse se planter dans le sol lorsqu'au cours de la pose de la conduite elle rencontre le sol, et aussi profilée dans sa partie supérieure, de manière à empêcher que ladite conduite puisse rester bloquée par-dessus ledit corps mort et que ladite conduite ne puisse pas alors se déposer horizontalement sur le sol marin, lorsque ladite partie inférieure du corps mort est plantée dans le sol.

La présente invention fournit également une conduite sous-marine comprenant un dispositif de courbure utile pour la dépose d'une conduite sous-marine au fond de la mer depuis un navire de pose en surface selon un procédé de dépose de conduite sous-marine selon l'invention, caractérisé en ce qu'elle comprend un dit dispositif de courbure d'une première portion de conduite sous-marine s'étendant entre deux dits points de fixation ou guidage, ledit dispositif de courbure comprenant au moins un câble et des moyens de tensionnement dudit câble entre les dits deux points de fixation ou guidage, ledit câble ou lesdits moyens de tensionnement comprenant ou coopérant avec au moins un dit moyen de blocage, lesdits deux points de fixation ou guidage étant espacés d'une longueur maximale L0 lorsque ladite première portion de ligne est en position rectiligne.

Plus particulièrement, dans une conduite selon l'invention, ledit câble est fixé à une extrémité à un premier gousset solidaire de ladite conduite sous-marine au niveau d'un dit point de fixation, ledit point de fixation étant situé à une distance L2 de l'extrémité inférieure de la conduite sous-marine lorsque la portion terminale de la conduite sous-marine s'étendant entre ladite extrémité inférieure et ledit point de fixation est rectiligne, et ledit câble passe par des moyens de guidage de câble solidaires de ladite conduite sous-marine au niveau d'un point de guidage, ledit point de guidage étant situé à une distance L0 dudit point de fixation lorsque la première portion de la conduite sous-marine s'étendant entre ledit point de guidage et ledit point de fixation est rectiligne et ledit câble coopérant avec des éléments de tensionnement comprenant un élément de flottabilité ou un poids ou corps mort, coopérant avec l'autre extrémité dudit câble et y exerçant une tension d'intensité P.

Dans un mode préféré de réalisation d'une conduite selon l'invention la conduite comprend ou coopère avec des éléments de flottabilité au niveau de sa dite portion terminale de conduite, lesdits éléments de flottabilité étant constitués par des éléments de flottabilité périphériques et coaxiaux se présentant sous forme de bouées de préférence régulièrement espacées les unes des autres de manière à compenser au moins le poids propre apparent dans l'eau de ladite portion terminale de conduit de longueur L2, et de préférence, en outre des éléments de flottabilité aptes à créer une flottabilité positive sur une partie de longueur L3 de ladite première portion de conduite s'étendant à partir dudit point de fixation ou guidage délimitant lesdites portion terminale et première portion de conduite, ladite flottabilité positive n'étant pas capable à elle seule d'engendrer ou d'augmenter la courbure de ladite première portion de conduite en l'absence ou respectivement en présence dudit tensionnement P du câble, à l'aide desdits moyens de tensionnement.

D'autres caractéristiques et avantages de la présente invention apparaîtront à la lumière détaillée des modes de réalisation qui vont suivre, en référence aux figures 1 à 8 :
- les figures 1A-1B-1C sont des vues de côté d'une conduite sous-marine en phase de démarrage d'installation par un navire de pose équipé d'une tour de pose en J, respectivement en configuration verticale proche de la surface, en configuration verticale à proximité du fond de la mer, et en configuration courbée en forme de J,
- les figures 2A-2B-2C sont des vues de côté d'une conduite sous-marine en phase de démarrage d'installation, représentant une première variante de l'invention selon les figures 1 et une première variante de l'invention (Fig. 2C).
- les figures 3A-3B sont des vues de côté d'une conduite sous-marine en phase de démarrage d'installation, représentant une seconde variante de l'invention selon les figures 1,
- la figure 4 est une vue de côté de la phase de démarrage de la pose de la conduite en configuration courbée, à quatre étapes intermédiaires M1-M4, avant procéder de manière continue à la pose courante,
- la figure 4A est une vue de face du réceptacle d'un connecteur automatique solidaire d'une pile enfoncée dans le fond de la mer,
- la figure 4B est une vue de côté d'un corps mort allongé présentant une forme conique en partie basse ainsi qu'en partie haute,
- la figure 5 est un graphique résultant d'un calcul dynamique, illustrant la déformée de la conduite dans une configuration particulière,
- les figures 6, 7A-7B sont des vues de côté d'un dispositif selon l'invention dans lesquelles le tensionnement du câble est assuré respectivement par un treuil (figure 6) et par un vérin hydraulique (figures 7A-7B),
- la figure 8 est un graphique résultant d'un calcul dynamique, illustrant la déformée de la conduite dans une configuration particulière.

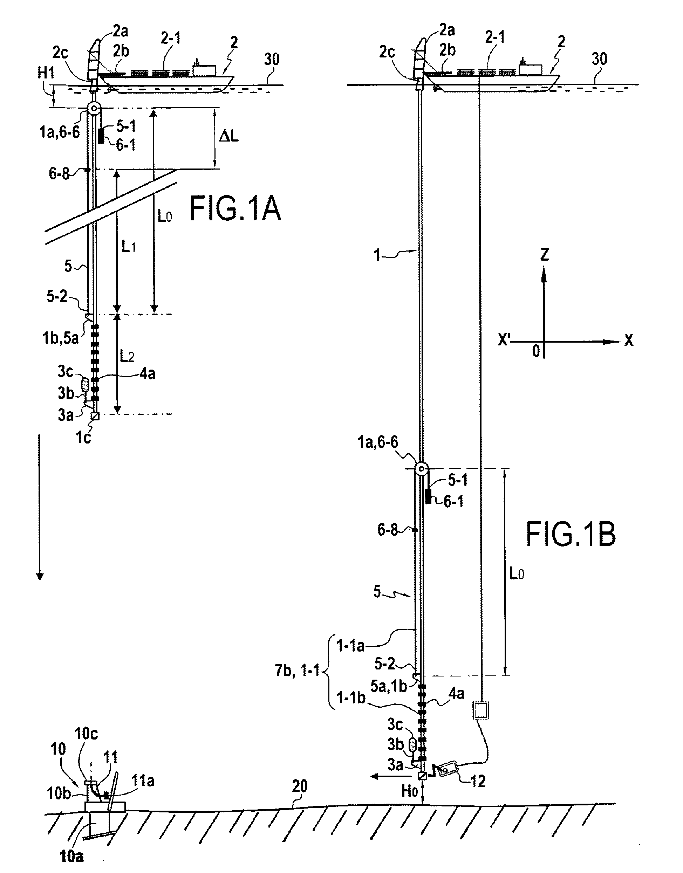

Sur la figure 1A on a représenté en vue de côté la phase de préparation de l'installation d'une conduite sous-marine rigide 1 à partir d'un navire de pose 2 équipé d'une tour de pose en J 2a. La conduite 1 est réalisée par assemblage par soudage bout à bout de rames en acier 2-1 au niveau de la tour de pose en J. Chaque rame 2-1 étant elle-même réalisée par assemblage bout à bout par soudage d'éléments unitaires de conduite de 6 ou 12m. Les rames 2-1 sont stockées sur le navire de pose 2 après avoir été fabriqués par assemblage d'éléments unitaires de conduites à terre.

Ladite conduite 1 est maintenue fermement en partie basse de ladite tour de pose en J, puis une nouvelle rame de 24 ou 48m de longueur, est installée en position horizontale sur une poutre 2b articulée au niveau de la structure de ladite tour. Ladite poutre 2b est alors mise en position sensiblement verticale au moyen de vérins hydrauliques, non représentés, puis ladite rame est transférée vers la tour puis rapprochée de l'extrémité supérieure de la conduite en suspension pour y être enfin soudée. Lorsque la soudure est terminée et testée, la conduite est protégée contre la corrosion, puis la partie supérieure de la rame est maintenue au sein de ladite tour par un dispositif de préhension solidaire d'un chariot non représenté. Le dispositif de retenue en pied de tour est alors ouvert et ledit chariot est déplacé vers le bas de la tour, sur une hauteur correspondant à la longueur de ladite rame. Le dispositif de retenue en pied de tour est alors reverrouillé, et le chariot libéré est remonté vers le haut de la tour. Le cycle recommence alors avec une nouvelle rame.

Dans la phase de démarrage de la pose, on installe successivement plusieurs accessoires décrits ci-après. L'extrémité inférieure de la première rame est équipée de la partie mâle, ou femelle, d'un connecteur automatique, qui constituera l'extrémité inférieure 1c de la conduite. A proximité dudit connecteur, on installe un flotteur 3c relié à un premier gousset 3a solidaire de la conduite, au moyen d'un lien 3b. A une distance L2 du connecteur automatique, on installe un deuxième gousset 5a solidaire de la conduite auquel est connecté un câble 5, de préférence un câble synthétique, dont l'autre extrémité 5-1 passe par une poulie 6-6 solidaire de la conduite à un point 1a dénommé « point de guidage », située à une distance L0 dudit deuxième gousset 5a. Ledit câble 5 est tourné autour de ladite poulie 6-6, son extrémité libre 5-1 de l'autre côté de ladite poulie par rapport à première extrémité 5-2 attachée au dit deuxième gousset 5a, est relié à un corps mort 6-1. Sur ledit câble 5 on installe un serre câble 6-8, appelé « taquet bloqueur » solidaire du câble, dont la fonction détaillée plus avant dans la description est de venir se bloquer à l'entrée de la poulie 6-6 et ainsi bloquer le câble.

Entre le deuxième gousset 5a et le premier gousset 3a, la conduite est équipée d'éléments de flottabilité périphériques coaxiaux 4a qui compensent le poids propre de cette portion de conduite. Cette portion terminale 1-1b de la conduite est donc en équilibre de flottabilité, donc neutre dans l'eau.

La longueur L2 représente de 12 à 24m, voire 48m. Elle fait donc partie de la première rame et est donc avantageusement préparée à bord, de même que le flotteur 3c, dans la mesure où ce dernier peut passer à travers la structure d'embase 2c de la tour en J 2a. Dans le cas contraire, le flotteur 3c sera installé de manière connue, au moyen du ROV 12, sous-marin automatique commandé depuis la surface, dès que l'extrémité inférieure de la conduite aura atteint une profondeur de 40-50m.

La longueur L0 de la première portion 1-1a de conduite représentant plusieurs centaines de mètres, la conduite est alors fabriquée par assemblage successifs de rames au sein de la tour de pose en J, comme expliqué précédemment. L'extrémité supérieure de la dernière rame assemblée de la partie inférieure 1-1 de conduite de longueur L2+L0 comporte une poulie 6-6 fixée sur un axe solidaire de ladite rame. Puis, on reprend la pose par assemblage de rames successives. Lorsque ladite poulie 6-6 se trouve à une profondeur H1 de 25-50m, le ROV 12 connecte l'extrémité inférieure d'un câble 5 sur le gousset 5a, puis passe ledit câble 5 autour de la poulie 6-6, la seconde extrémité 5-1 du câble étant reliée à un corps mort 6-1 descendu depuis le navire 2, ce corps mort 6-1 pendant naturellement à proximité de ladite conduite 1, sans interférer avec cette dernière.

Comme représenté sur la figure 1B, la pose est alors poursuivie vers le fond de la mer 20, puis est stoppée à H0 d'environ 20-25m dudit fond de la mer. Le ROV 12, grâce à ses propulseurs de forte puissance, exerce alors une poussée horizontale sur l'extrémité inférieure 1c de la conduite dirigée vers la gauche selon la direction XX', c'est-à-dire dans le plan XoZ.

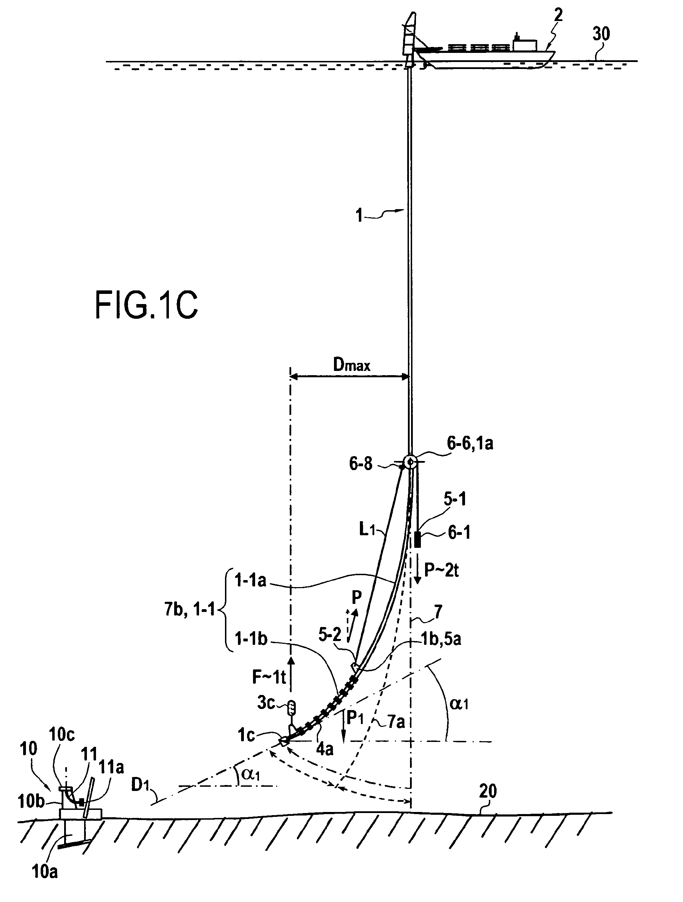

Sur la figure 1C on a représenté le résultat de cette poussée. En effet, au départ l'axe 7 de la conduite 1 est sensiblement confondu avec l'axe ZZ vertical. Dès qu'une poussée suffisante est exercée horizontalement vers la gauche sur son extrémité inférieure 1c, la partie inférieure 1-1 de la conduite prend une forme courbe 7a, car le moment résultant de la force F créée par le flotteur 3c, additionné du moment de la force P créée par le câble 5 tendu par le corps mort 6-1 est supérieur à la résultante des moments antagonistes créés par le poids propre P1 de la première portion de conduite 1-1a de longueur L0 comprise entre la poulie 6-6 et le deuxième gousset 5a, additionné du moment de rappel vers le bas dû à la raideur de la portion de conduite courbée, moment s'opposant à ladite courbure en agissant telle une lame de ressort. Il convient de noter que la portion terminale 1-1b de longueur L2 de conduite comprise entre le gousset 5a et le connecteur automatique à son extrémité inférieure 1c est munie d'éléments de flottabilité 4a lui conférant un poids apparent dans l'eau nul. Ainsi, ce poids n'intervient pas dans l'équilibre des moments.

Tant que le ROV 12 ne pousse pas suffisamment pour atteindre la forme d'une courbe intermédiaire 7a appelée « position de basculement », s'il arrête de pousser, la conduite revient alors vers sa position verticale 7 initiale, car la résultante du moment des forces est positive, c'est-à-dire qu'elle est dans le sens trigonométrique.

Ainsi, la résultante des moments est :
- positive mais variable entre la position verticale 7 et la position de basculement correspondant à la courbe 7a,
- nulle en position verticale correspondant à la droite 7,
- nulle à la position de basculement correspondant à la courbe 7a.

La position verticale 7 correspond à une configuration stable, alors que la position 7a correspond à une configuration instable. Au-delà de la courbe 7a, le moment de la résultante des forces devient négatif et la courbure de la conduite augmente, ainsi que le moment des forces en valeur absolue, pour atteindre la configuration finale 7b. En effet, le taquet bloqueur 6-8 préinstallé sur le câble 5 vient buter à l'entrée de la poulie 6-6 sur un dispositif non représenté de telle manière que la corde de longueur L1 du câble sous-tende un arc de conduite, dont la courbure ne dépasse pas la courbure maximale acceptable par ladite conduite en acier. Ainsi, dès que la courbure de la conduite atteint la configuration de la courbe 7b, seul le flotteur 3c crée un léger accroissement du moment des forces, mais ledit flotteur 3c est avantageusement dimensionné pour être insuffisant à faire évoluer, à lui seul, la courbure de la conduite. On ajuste avantageusement les valeurs de L0 et L1 pour que la courbure maximale 7b de la conduite soit telle que la contrainte maximale engendrée par la courbure reste inférieure à la limite élastique, par exemple inférieure à 90%, voire 95% de ladite limite élastique. On entend ici par « limite élastique », la contrainte au-delà de laquelle la déformation de la conduite devient irréversible, ce qui conduit à une déformation plastique irréversible de l'acier, risquant alors de conduire à un pliage de la conduite, donc à la ruine de ladite conduite.

Entre la position verticale 7 et la configuration 7a, le flotteur 3c a pour but principal d'aider le ROV à atteindre ladite position de basculement 7a. Au-delà de la position 7a, l'élément moteur essentiel est le corps mort 6-1 par l'intermédiaire du câble 5, jusqu'à ce que le taquet bloqueur 6-8 limite l'augmentation du moment résultant en valeur absolue (moment négatif).

En l'absence du taquet bloqueur 6-8, la limite élastique de l'acier serait irrémédiablement dépassée et la conduite serait alors pliée en un point situé entre le deuxième gousset 5a et la poulie 6-6, en général à proximité dudit deuxième gousset 5a, car c'est dans cette zone que le rayon de courbure est minimal, donc la courbure et la contrainte dans l'acier y est maximale.

En fonction du dimensionnement du flotteur 3c, du corps mort 6-1, de la longueur L0 par rapport au poids propre et à la raideur de la conduite 1, on peut ajuster avantageusement la position de la courbe de basculement 7a :
- soit en la rapprochant de la position 7 correspondant sensiblement à la verticale, en augmentant par exemple la flottabilité de la bouée 3c, ou encore en augmentant le poids du corps mort 6-1, ou encore en combinant les deux augmentations,
- soit en la rapprochant de la position finale 7b recherchée, en diminuant par exemple la flottabilité de la bouée 3c, ou encore en diminuant le poids du corps mort 6-1, ou encore en combinant les deux diminutions.

Dans le cas où la configuration d'équilibre 7a est très proche de la verticale, il suffit d'une légère impulsion horizontale de la part du ROV 12 pour qu'immédiatement l'ensemble bascule en quelques secondes vers la position 7b. On évitera cette situation, car l'ensemble risque alors de basculer brutalement et de manière incontrôlée dès lors que l'on a installé le corps mort, c'est-à-dire dans la configuration décrite en référence à la figure 1A, donc à proximité de la surface alors que le fond de la mer se trouve 1500 à 2000m plus bas, voire plus.

Au cas où l'on recherche cette instabilité de manière à minimiser l'effort horizontal de déclenchement créé par le ROV, on installe avantageusement un premier dispositif de blocage en rotation de la poulie 6-6 par rapport à la conduite, dispositif non représenté, ainsi qu'un second dispositif de blocage du câble 5 par rapport à ladite poulie 6-6, dispositif non représenté. Ainsi, poulie 6-6 et câble 5 étant bloqués pendant la phase de descente, la conduite reste en position sensiblement verticale et le corps mort 6-1 n'a aucune influence. Une fois arrivé à proximité du fond de la mer, le ROV 12 libère le blocage du câble 5 ainsi que celui de la poulie 6-1, et à la moindre instabilité du navire, ou en cas de courant de fond significatif vers la gauche, la portion inférieure de la conduite prend alors en quelques secondes la courbure de la configuration 7b de la figure 1C. Il convient de noter cependant qu'en cas de courant important vers la droite, la conduite risque de se courber dans le même plan XoZ, mais dans le sens inverse, ce qui serait préjudiciable à la suite des opérations.

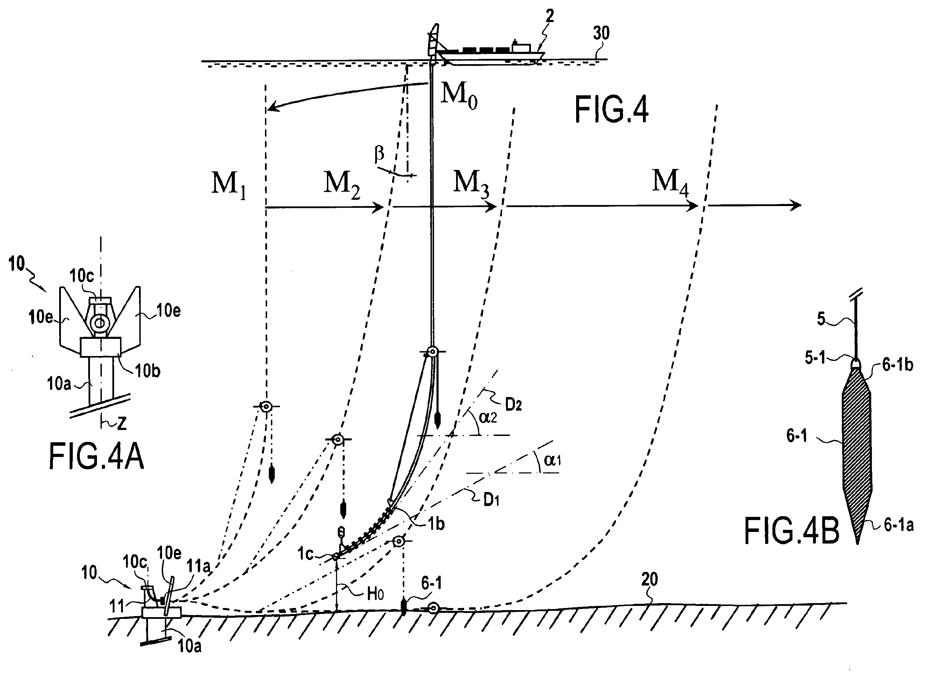

Sur la figure 4 on a représenté en vue de côté les principales phases de l'installation de l'extrémité 1c de la conduite 1 équipée d'un connecteur sur une embase 10 fixe sur le fond de la mer. L'embase 10 est constituée d'une pile 10a enfoncée dans le fond de la mer 20, surmontée d'une structure 10b sur laquelle est installé rigidement un support 10c d'une conduite de liaison fond surface de type tour, non représentée, ledit support comportant un élément de conduite coudée 11 à l'extrémité de laquelle est installée la partie femelle, respectivement mâle 11a, d'un connecteur automatique, correspondant à la partie mâle respectivement femelle du connecteur automatique installé à l'extrémité 1c de la conduite 1. Deux éléments de guidage 10e en forme d'aile de papillon sont solidaires de la structure 10b et ont pour fonction de guider l'extrémité 1a de la conduite 1 lors de son approche vers l'embase 10.

Dans la position M0, la portion supérieure de la conduite 1 est sensiblement verticale et son extrémité inférieure a été mise en configuration courbée en J 7b, comme expliqué précédemment. La conduite courbée se trouve dans le plan XoZ libre de toute contrainte de traction horizontale. Le navire se positionne alors de telle manière que le plan ZoX comprenant ladite conduite 1 courbée comprenne aussi l'axe de l'embase 10 et de sa pile 10a.

Le navire recule et se rapproche de la structure d'embase 10 au fond de la mer vers la position M1 jusqu'à ce que le connecteur à l'extrémité inférieure 1a soit positionné à la verticale des deux guides 10e en forme d'aile de papillon. Puis, la conduite est descendue vers l'embase 10, si nécessaire par ajout au niveau de la tour de pose en J d'une rame 2-1 supplémentaire. Cette opération très délicate est effectuée sous le contrôle et avec l'aide du ROV 12. Lorsque le connecteur automatique de l'extrémité 1c de la conduite 1 se trouve bloquée en partie basse des guides 10e, à proximité de la partie correspondante du connecteur automatique fixe 11a, le navire avance, c'est-à-dire se déplace en sens inverse en s'éloignant de ladite structure d'embase 10 vers la position M2 tout en continuant l'assemblage des rames nécessaires pour obtenir une inclinaison de la conduite en surface d'un angle β, de préférence inférieur à 10°, correspondant à une position sensiblement horizontale de la portion terminale 1-1b de la conduite 1 au niveau de son extrémité inférieure 1c comprenant un dit connecteur automatique. Les deux éléments de connecteurs 1c,11a sont alors face à face et peuvent être assemblés par un dispositif, par exemple hydraulique, non représenté, puis être verrouillés au moyen du ROV 12 piloté depuis la surface.

Le navire d'installation 2 continue la pose en s'éloignant de l'embase 10 au fond de la mer 20 vers la position M3, position dans laquelle le corps mort 6-1 touche le sol. Ledit corps mort 6-1 est avantageusement profilé comme représenté sur la figure 4B, de manière à présenter en partie inférieure une forme de pointe ou d'obus 6-1a et en partie supérieure une forme similaire 6-1b. Ainsi, lorsqu'il atteint le sol, il se plante verticalement dans le fond de la mer 20 et reste en position verticale. Dès que le corps mort est planté au sol, la tension dans le câble 5 s'annule et la conduite, courbée en raison de ladite tension P dans ledit câble 5, reprend, de par la raideur de ladite conduite, une configuration sensiblement rectiligne au fur et à mesure de la progression de la pose telle que représentée sur la position M4 de la figure 4. La partie supérieure du corps mort 6-1 étant profilée 6-1b de manière conique, la conduite, lors de la pose ne risque pas de rester bloquée au dessus, mais glisse sur le côté jusqu'au sol.

Des installations de ce type ont été décrites dans les demandes de brevets antérieures W02002/066786 et W02003/095788.

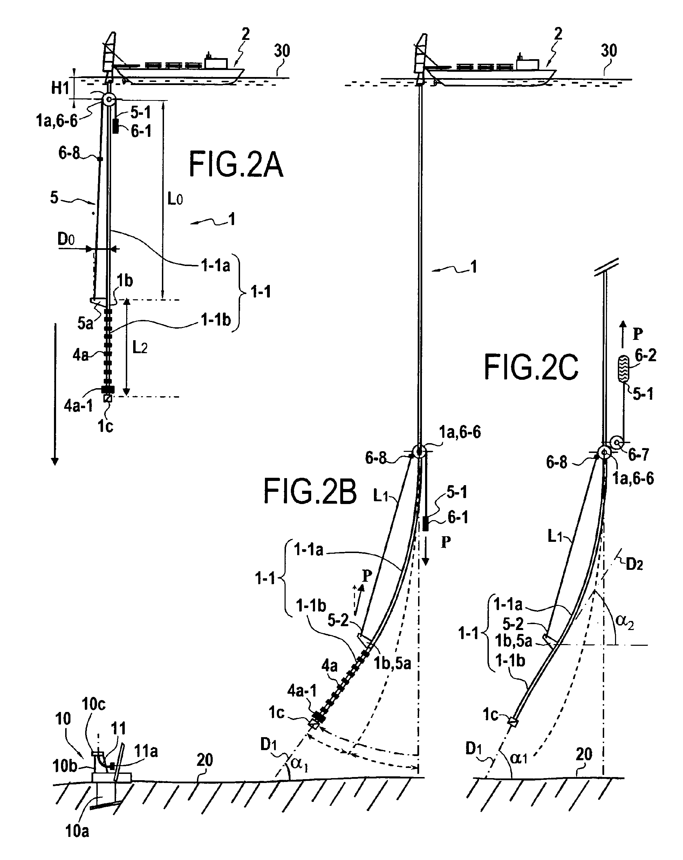

Sur les figures 2A - 2B, on a représenté une variante dans laquelle on a supprimé le flotteur d'extrémité 3c de la figure 1C, mais on a compensé cette absence en augmentant le poids du corps mort 6-1, et on a augmenté la distance D₀ par rapport à l'axe de la conduite, du point de fixation de l'extrémité 5-2 du câble 5 sur le deuxième gousset 5a. La longueur L2 de la portion terminale 1-1b de la conduite est toujours munie d'éléments de flottabilité coaxiaux 4a pour la rendre neutre dans l'eau, un élément de flottabilité terminale 4a-1 compense le poids du connecteur automatique. Le processus reste identique, mais le seuil de déclenchement s'en trouve modifié en fonction du poids du corps mort 6-1, de la valeur du déport D₀ ainsi que de la longueur L0 entre la poulie 6-6 et le deuxième: gousset 5a. L'absence de flotteur 3c d'extrémité fait que lorsque la conduite se courbe comme représenté sur la figure 2B, la longueur L2 reste rectiligne. Cette configuration est avantageuse, car elle ne nécessite pas le démontage du flotteur 3c de la variante décrite en référence des figures 1A-1C, ledit démontage étant délicat et coûteux en termes de temps d'occupation du navire d'installation.

Dans les modes de réalisation des figures 1C et 2B, lesdits premiers éléments de flottabilité 4a dans la portion terminale 1-1b de conduite et ledit deuxième élément de flottabilité 3c au niveau de l'extrémité inférieure 1c, permettent que l'angle α₁ de la tangente D1 de ladite conduite au niveau de son extrémité inférieure 1c reste inférieur à 45° lorsque ladite première portion de conduite 1-1a est elle-même courbée au maximum pour le câble atteigne la corde de valeur limite L1. Cette position est suffisante pour qu'ultérieurement après connexion de l'extrémité inférieure 1c au niveau de l'élément de raccordement complémentaire 11a au fond de la mer, on puisse obtenir une courbe en J par descente additionnelle de la conduite depuis la surface et dépose au fond de la mer de la partie inférieure 1-1 de conduite au fur et à mesure de l'éloignement du navire et dépose par descente de conduites concomitantes.

On a décrit l'invention en utilisant un corps mort 6-1 pour créer la tension dans le câble 5, mais on peut tout aussi bien créer cette tension en remplaçant ledit corps mort par un flotteur 6-2 de capacité identique. Il convient cependant de modifier le système de poulies de manière à ce que le câble y reste prisonnier. Cette version représentée Fig. 2C présente cependant l'inconvénient de nécessiter la déconnexion de ladite bouée 6-2 en fin d'installation et ne constitue donc pas une version préférée de l'invention. Ainsi, les moyens de guidage du câble 5 comprennent alors une deuxième poulie 6-7 autour de laquelle ledit câble tourne de manière à ce que l'élément de flottabilité 6-2 puisse tensionner vers le haut l'extrémité 5-2 dudit câble, de manière à tendre la corde de longueur limite L1 du câble 5 entre le deuxième gousset 5a et la première poulie 6-6.

D'autre part, sur la figure 2C, la portion terminale 1-1b de la conduite, dont l'extrémité inférieure 1c comporte un élément de raccordement de type connecteur automatique, ne coopère pas et ne comprend pas d'élément de flottabilité. Dans ce cas, la portion terminale 1-1b de conduite entre l'extrémité inférieure 1c et le point de fixation 1b n'adopte pas nécessairement une forme courbe avec un angle α₁ de la tangente D1 de la conduite à son extrémité inférieure 1c, qui soit inférieur à 45°, mais la courbure de la première portion de conduite 1-1a réalisée avec le tensionnement du câble 5 permet cependant de réaliser une courbure telle que l'angle α₂ de la tangente D2 de la conduite au niveau de son point de fixation 1b du gousset paraisse inférieur à 45°.

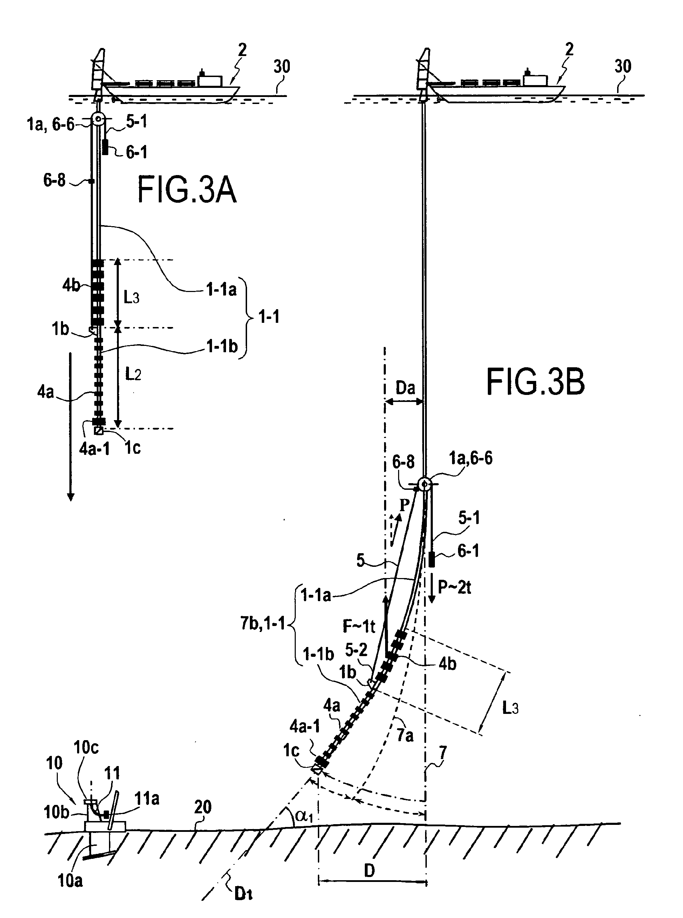

Sur les figures 3A-3B, on a décrit une variante préférée de l'invention dans laquelle on installe entre le deuxième gousset 5a et la poulie 6-6, une flottabilité répartie sur la portion terminale 1-1b de la conduite 1 à l'aide d'éléments de flottabilité périphériques coaxiaux 4a, régulièrement espacés conférant un poids apparent dans l'eau nul de ladite portion terminale 1-1b de conduite et une flottabilité répartie sur une partie de longueur L3 de la première portion de conduite 1-1a s'étendant en amont depuis ledit deuxième gousset 5a, sous la forme d'éléments de flottabilité 4b conférant une flottabilité résultante positive de ladite longueur de conduite L3 représentant de 20% à 200% du poids propre de la partie de longueur L3 de ladite première portion 1-1a de conduite. Cette flottabilité positive joue un rôle du même type que celui du flotteur 3c de la figure 1C, mais engendre un moment plus faible, car le bras de levier moyen Da est plus court. Ce mode de réalisation est avantageux, car les éléments de flottabilité 4b conférant cette flottabilité additionnelle à la conduite sont directement associés à celle-ci et peuvent rester en place et ne nécessitent pas de démontage en fin d'installation. Dans cette version préférée, la portion L2 de conduite reste rectiligne car le poids de la conduite est compensé par les éléments de flottabilité 4a,4b,4a-1 installés le long de la portion terminale 1-1b de la conduite.

De multiples variantes peuvent être envisagées pour la position de la flottabilité positive, par exemple une flottabilité positive sur toute la longueur L2, ou encore un flotteur accroché sur le deuxième gousset 5a, mais dans tous les cas, ladite flottabilité n'est pas suffisante à elle seule pour que la courbure de la conduite atteigne la position 7b, et encore moins puisse la dépasser vers le haut, cette configuration 7b étant obtenue grâce au corps mort 6-1 de poids P agissant sur le câble 5, ladite configuration ne pouvant être dépassée en raison du blocage du taquet bloqueur 6-8 à l'entrée de la poulie 6-6, limitant ainsi la courbure de ladite conduite à un niveau de contrainte acceptable.

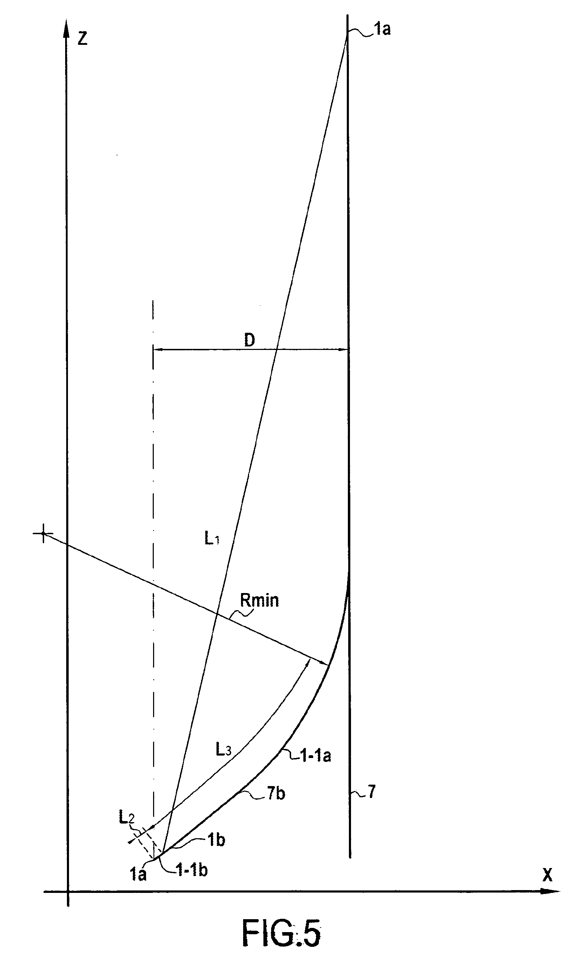

La figure 5, est un graphique résultant d'un calcul par ordinateur de la courbe 7b d'une version préférée de l'invention représentée figure 3B, dans laquelle on a installé une flottabilité visant à équilibrer le poids de la conduite sur la longueur L2 de la portion terminale 1-1b sous la forme d'éléments de flottabilité 4 (non représentés figure 5) et 4b sur une partie de longueur L3 de la première portion de conduite 1-1a s'étendant depuis ledit deuxième gousset 5a, sous la forme d'éléments de flottabilité 4b (non représentés figure 5), compensant le poids propre de la conduite. Un élément de flottabilité 4a (non représenté sur la figure 5) compense le poids propre du connecteur d'extrémité 1c (non représenté figure 5). Cette courbe a été obtenue par calcul sur la base d'une conduite en acier de diamètre extérieur 323.9mm et de 17.5mm d'épaisseur, pesant 132.23kg/m dans l'air. La distance L0 entre le gousset 5a et la poulie 6-6 est L0 = 500m, la distance du taquet bloqueur 6-8 au gousset 5a est L1 = 492m et le poids du corps mort 6-1 est P = 2t. Des éléments de flottabilité 4a visant à compenser le poids propre de la conduite sont installés sur la partie terminale 1-1b de longueur L2=12m et sur une longueur L3=150m de la première portion de conduite 1-1a. Le rayon de courbure minimal de la courbe résultante 7b est situé au niveau de la transition entre la conduite équipée d'éléments de flottabilité 4b et la conduite en amont démunie desdits éléments de flottabilité : - Rmin∼156m, ce qui correspond à une contrainte maximale de 215 MPa. La distance D entre l'extrémité 1c de conduite et la position verticale initiale représente environ 100m, ce qui donne à la courbe une grande souplesse et une grande facilité de manipulation par le ROV. Ainsi, l'opération de dépose du connecteur et la connexion de la conduite sur son réceptacle 10 ou structure d'embase 10 au fond de la mer peut s'effectuer dans d'excellentes conditions de sécurité.

A titre d'exemple en référence à la figure 1C, par 1500m de profondeur d'eau, pour l'installation d'une conduite de diamètre extérieur 323.9mm et de 17.5mm d'épaisseur, pesant 132.23kg/m dans l'air, on installe des éléments de flottabilité 4a pour rendre le poids de la conduite neutre dans l'eau, sur une longueur L2 = 24m. Le flotteur d'extrémité 3c exerce une poussée verticale de 1.4t. La distance L0 entre le gousset 5a et la poulie 6-6 est L0 = 500m, la distance du taquet bloqueur 6-8 au gousset 5a est L1 = 492m et le poids du corps mort 6-1 est P = 2t. L'angle α₁ de la configuration finale de la courbure 7b est d'environ α₁∼40-45°.

A titre d'exemple en référence à la figure 3B, par 1500m de profondeur d'eau, pour l'installation d'une conduite en acier de diamètre extérieur 323.9mm et de 17.5mm d'épaisseur, pesant 132.23kg/m dans l'air, on installe des éléments de flottabilité pour rendre le poids de la conduite neutre dans l'eau, sur une longueur L2 = 24m. On installe une flottabilité 4b répartie sur une longueur L3 = 15m, d'une valeur de 230kg/m. La distance L0 entre le deuxième gousset 5a et la poulie 6-6 est L0 = 500m, la distance du taquet bloqueur 6-8 au gousset 5a est L1 = 492m et le poids du corps mort 6-1 est P = 2t. L'angle α₁ de la configuration finale de la courbure 7b est d'environ α₁∼40-45°.

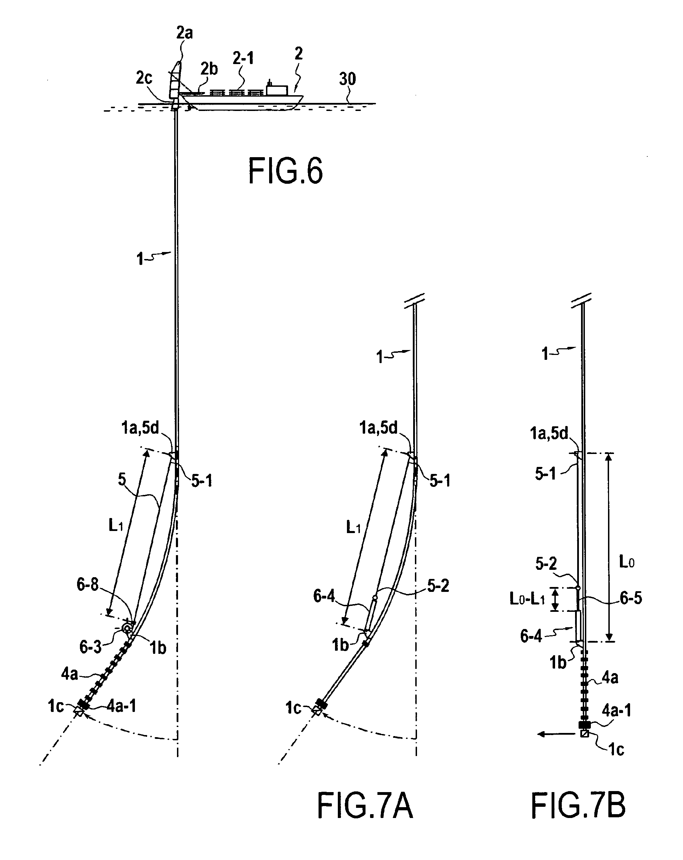

Dans d'autres variantes de réalisation, représenté sur les figures 6 et 7A-7B, on remplace ledit corps mort 6-1 ou ledit flotteur 6-2 par un treuil 6-3 ou un vérin 6-4, lesquels seront alors alimentés en énergie et contrôlés par le ROV. Ledit treuil 6-3 ou ledit vérin 6-4 étant de préférence solidaire de la conduite au niveau du gousset 5a, la seconde extrémité 5-1 du câble 5 étant fixée sur un gousset 5d solidaire de la conduite 1, positionné au même endroit 1a que la poulie 6-6 précédemment décrite en référence aux figures 1 à 5. Ainsi, dans le cas d'un treuil 6-3, représenté sur la figure 6, le taquet bloqueur 6-8 se trouve du côté du gousset 5a, à une distance L1 du gousset 5d et vient se bloquer à l'entrée du treuil 6-3 lorsque ce dernier enroule le câble 5 pour créer la tension P destinée à engendrer la courbure de la conduite.

Dans le cas d'un vérin 6-4, représenté sur les figures 7A-7B, la course de la tige 6-5 dudit vérin correspond avantageusement à la différence ΔL = L0-L1, c'est-à-dire une course de 8m dans le cas des exemples précédemment cités. Sur la figure 7A on a représenté la conduite en position verticale, la tige du vérin 6-4 étant déployée, et sur la figure 7B, la conduite en position courbée, la tige du vérin 6-4 étant en position rétractée. Pour réduire la course dudit vérin, on utilise avantageusement un moufflage du câble à N brins, ce qui implique de mettre en oeuvre un vérin dont la capacité de charge est supérieure ou égale à NxP, P étant la tension requise pour obtenir la courbure désirée de la conduite.

On a décrit l'invention dans le cadre de la pose de conduites rigides, mais elle reste aussi très intéressants dans le cas de l'installation des conduites flexibles, des câbles électriques et des ombilicaux.

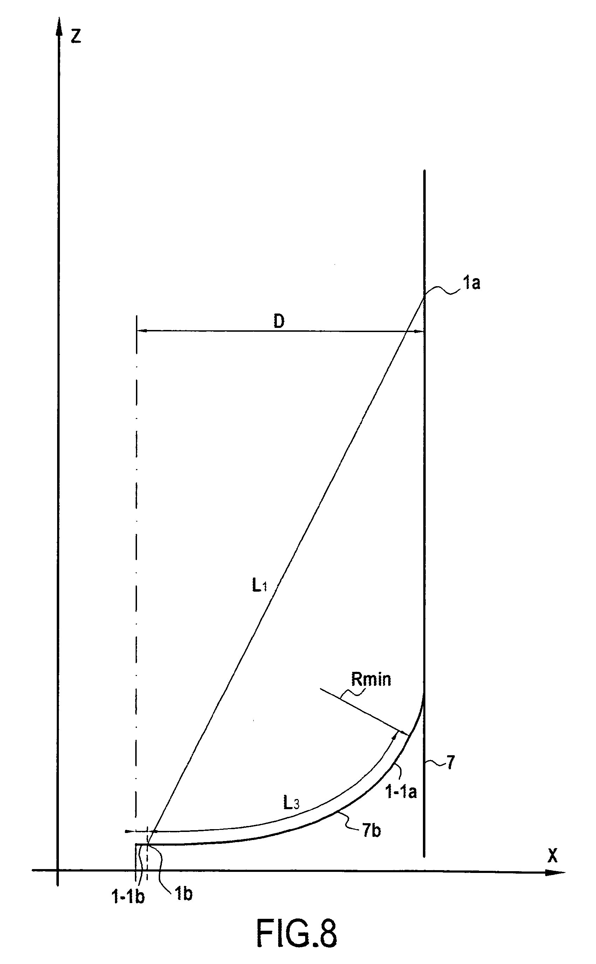

Pour la clarté des dessins, les différentes longueurs L0 à L4 et H0, H1 ne sont pas à l'échelle de la réalité relativement les unes aux autres, sauf dans le cas des figures 6 et 8 qui correspondent respectivement à des graphiques résultant d'un calcul de l'équilibre mécanique de l'ensemble.

Les éléments de flottabilité 4a et 4b sont constitués de préférence par des bouées périphériques et coaxiales entourant ladite conduite, espacées les unes des autres régulièrement, constituées notamment de mousse syntactique.

Dans un autre mode de réalisation, la flottabilité peut être constituée d'un revêtement continu de matériau de flottabilité positive appliqué par exemple sous forme de coquilles semi-tubulaires assemblées deux à deux et enveloppant ladite conduite.

La figure 8, est un graphique résultant d'un calcul par ordinateur de la courbe 7b d'une version préférée de l'invention représentant une variante de la figure 5, dans laquelle on a installé une flottabilité visant à équilibrer le poids de la conduite sur la longueur L2 de la portion terminale 1-1b sous la forme d'éléments de flottabilité 4a (non représentés figure 8) sur une partie de longueur L3 de la première portion de conduite 1-1a s'étendant depuis ledit deuxième gousset 5a, sous la forme d'éléments de flottabilité 4b (non représentés figure 8), compensant le poids propre de la conduite. Un élément de flottabilité 4a-1 (non représenté sur la figure 8) compense le poids propre du connecteur d'extrémité 1c (non représenté figure 8). Cette courbe a été obtenue par calcul sur la base d'une conduite en acier de diamètre extérieur 323.9mm et de 17.5mm d'épaisseur, pesant 132.23kg/m dans l'air. La distance L0 entre le gousset 5a et la poulie 6-6 est L0 = 500m, la distance du taquet bloqueur 6-8 au gousset 5a est L1 = 415m et le poids du corps mort 6-1 est P = 0.8t. Des éléments de flottabilité 4a visant à compenser le poids propre de la conduite sont installés sur la partie terminale 1-1b de longueur L2=6m et sur une longueur L3=200m de la première portion de conduite 1-1a. Le rayon de courbure minimal de la courbe résultante 7b est situé au niveau de la transition entre la conduite équipée d'éléments de flottabilité 4b et la conduite en amont démunie desdits éléments de flottabilité : - Rmin∼105m, ce qui correspond à une contrainte maximale de 340 MPa. La distance D entre l'extrémité 1c de conduite et la position verticale initiale représente environ 265m, ce qui donne à la courbe une grande souplesse et une grande facilité de manipulation par le ROV. De plus, l'extrémité de la conduite est quasiment horizontale, et l'opération de dépose du connecteur et la connexion de la conduite sur son réceptacle 10 ou structure d'embase 10 au fond de la mer peut s'effectuer dans d'excellentes conditions de sécurité.

Pour augmenter encore la souplesse du dispositif, on augmente avantageusement la longueur L2 de la portion terminale jusqu'à 20-30m voire 50m, cette portion étant neutre dans l'eau restera libre et facile à déplacer au moyen du ROV. On limite cependant sa longueur en fonction des courants locaux, car si ladite conduite reste neutre vis-à-vis de la pesanteur, elle reste cependant soumise aux courants marins qui peuvent déstabiliser le dispositif, surtout en cas de courants latéral, c'est-à-dire selon l'axe YY perpendiculaire à la surface de la figure 8.

## Revendications

1. Procédé de dépose d'une ligne sous-marine (1) au fond de la mer (20) depuis la surface (30), pour en connecter l'extrémité inférieure (1a) à un élément de raccordement (11a) au fond de la mer, **caractérisé en ce que** l'on réalise les étapes dans lesquelles :
1) on positionne ladite ligne sous-marine suspendue depuis la surface (30) en position sensiblement verticale (7), son extrémité inférieure (1c) étant située à une hauteur H0 au dessus du fond de la mer (20), ladite ligne sous-marine comprenant dans sa partie inférieure (1-1) un dispositif de courbure d'une première portion (1-1a) de ligne sous-marine s'étendant entre deux points (1a,16) de ladite ligne sous-marine dénommés points de fixation ou guidage, ledit dispositif de courbure comprenant au moins un câble (5) et des moyens de tensionnement (6-1 à 6-5) dudit câble entre lesdits deux points de fixation ou guidage (1a, 1b) au niveau desquels ladite ligne sous-marine est solidaire dudit câble par fixation ou respectivement par guidage, lesdits moyens de tensionnement (6-1 à 6-5) étant aptes à rapprocher les deux dits points de fixation ou de guidage (1a,16) en diminuant la longueur de câble s'étendant entre les deux dits points de fixation ou guidage (1a,1b), depuis une longueur maximale L0 jusqu'à une valeur limite inférieure donnée L1 , ledit câble ou les dits moyens de tensionnement comprenant ou coopérant avec au moins un moyen de blocage (6-8) apte à empêcher la diminution de la longueur du câble tendu entre les dits deux points de fixation ou guidage (1a, 1b) en dessous d'une dite valeur limite inférieure donnée L1, lesdits deux points (1a,1b) de fixation ou guidage étant espacés d'une longueur maximale L0 lorsque ladite première portion de ligne sous-marine (1-1a) est en position rectiligne, et
2) l'extrémité inférieure (1c) de ladite ligne sous-marine est déplacée, de préférence à l'aide d'un robot sous-marin piloté (12) de préférence encore du type ROV, de manière à ce que l'extrémité inférieure (1c) de ladite ligne sous-marine s'écarte de sa position initiale de l'étape 1) dans laquelle ladite ligne était en position verticale, lesdits moyens de tensionnement créant une courbure (7b) contrôlée de ladite première portion (1-1a) de ligne sous-marine par dit rapprochement des deux dits points de fixation ou guidage (1a, 1b), ladite courbure de la première portion (1-1a) de ligne sous-marine étant limitée du fait que la diminution de la longueur de la corde formée par le câble tendu entre les dits deux points de fixation ou guidage (1a, 1b) ne peut pas diminuer en dessous de ladite valeur limite inférieure donnée L1, et
3) si nécessaire, on déplace ladite ligne sous-marine (1), dont la première portion (1-1a) comprend une dite forme courbe (7b) en la rapprochant du fond de la mer (20), concomitamment à la descente additionnelle de dite ligne, depuis la surface (30), puis
4) on finalise le positionnement de ladite extrémité inférieure (1c) de la ligne, au regard dudit élément de raccordement (11a) au fond de la mer, et on réalise la connexion de l'extrémité inférieure (1c) de ladite ligne au dit élément de raccordement (11a).

2. Procédé selon la revendication 1, **caractérisé en ce que** lesdits moyens de tensionnement comprennent l'un au moins des 3 moyens de tensionnement suivants :
a) un corps-mort (6-1) ou un élément de flottabilité (6-2) fixé ou relié à une extrémité (5-1) dudit câble, ledit câble (5) étant dans ce cas guidé entre ses deux extrémités (5-1,5-2) par des moyens de guidage (6-6,6-7) solidaires de ladite ligne au niveau d'un des deux dits points de fixation ou guidage (1a,1b), qui est un point de guidage (1a) dudit câble sur ladite ligne, l'autre extrémité (5-2) dudit câble étant fixée ou reliée à l'autre point de fixation ou de guidage, qui est un point de fixation (1b), et de préférence ledit câble comprenant un dit moyen de blocage (6-8) constitué d'un taquet bloqueur solidaire du câble, ledit taquet bloqueur ne pouvant pas passer à travers au moins un des dits moyens de guidage (6c-5), et
b) un treuil (6-3) fixé ou relié à la ligne sous-marine à au moins un des deux dits points de fixation ou guidage (1a,1b), treuil (6-3) sur lequel ledit câble peut être enroulé depuis au moins une de ses extrémités (5-2) à laquelle il est fixé au treuil, et de préférence ledit câble comprenant un dit moyen de blocage (6-8) constitué d'un taquet bloqueur solidaire du câble empêchant l'enroulement supplémentaire du câble autour dudit treuil, et
c) un vérin (6-4) fixé ou relié à la ligne sous-marine à au moins un des deux dits points de fixation ou de guidage (1a,1b), comprenant une tige de vérin (6-5) dont une extrémité est fixée ou reliée à au moins une extrémité (5-2) dudit câble, de préférence ladite tige de vérin (6-5) ne pouvant se déplacer que d'une distance maximale égale à L0-L1.

3. Procédé selon la revendication 1 ou 2 **caractérisé en ce que** :
- ledit câble (5) est fixé à une extrémité (5-2) à un gousset (5a) solidaire de ladite ligne au niveau d'un dit point de fixation (1b) délimitant ladite première portion (1-1a) et la portion terminale (1-1b) de partie inférieure (1-1) de la ligne sous-marine, et ledit câble (5) passe entre ces deux extrémités (5-1,5-2) par des moyens de guidage de câble (6-6,6-7) solidaires de ladite ligne sous-marine au niveau d'un point de guidage (1a) sur ladite ligne sous marine, l'autre extrémité (5-1) dudit câble coopérant avec des éléments de tensionnement (6-1,6-2) comprenant un élément de flottabilité (6-2) ou un poids ou corps mort (6-1), exerçant à ladite autre extrémité une tension d'intensité (P), et
- à l'étape 2), on déplace l'extrémité inférieure (1c) de ladite ligne sous-marine, de manière à créer une courbure (7b) contrôlée de la première portion (1-1a) de ligne sous-marine comprise entre ledit point de fixation (1b) sur la ligne et ledit point de guidage (1a) sur la ligne du fait que :
- lesdits éléments de tensionnement (6-1,6-2) exercent une tension (P) d'intensité apte à tendre ledit câble (5) et engendrer une courbure de ladite première portion (1-1a) de ligne sous-marine, lorsque l'extrémité inférieure (1c) de ladite ligne sous-marine est écartée de sa position initiale de l'étape 1) dans laquelle ladite ligne était en position verticale, et
- ledit câble (5) comprend ou coopère avec un moyen de blocage (6-8) empêchant la diminution de la longueur de ladite corde formée par le câble tendu entre le point de fixation (1b) et ledit point de guidage (1a), en dessous d'une valeur limite donnée de longueur L1, limitant ainsi la courbure de ladite première portion (1-1a) de ligne entre le point de fixation (1b) et ledit point de guidage (1a) résultant dudit tensionnement.

4. Procédé selon l'une des revendications 1 à 3 **caractérisé en ce que** :
- ladite ligne sous-marine est une conduite sous-marine en acier constituée de rames (2-1) assemblées les unes aux autres bout à bout par soudage en position dans une tour de pose (2a) d'un navire de pose (2) en surface à partir duquel on réalise la dépose de ladite conduite sous-marine au fond de la mer, et
- à l'étape 2), on déplace l'extrémité inférieure (1c) de ladite ligne sous-marine à l'aide d'un robot sous-marin piloté (12), de préférence encore du type ROV,
- ladite courbure de ladite première portion de conduite sous-marine entre les deux dits points de fixation ou guidage étant limitée de telle sorte que le rayon de courbure de ladite conduite reste supérieur à une valeur limite correspondant à une contrainte maximale inférieure à la limite élastique de l'acier de ladite première portion de conduite, de préférence ladite courbure étant telle que l'angle α₂ de la tangente D2 de la conduite au niveau dudit point de fixation (1b) est inférieur à 45°, de préférence inférieur à 30°, et
- à l'étape 3), on déplace ladite conduite sous-marine dont ladite première portion (1-1a) comprend une forme courbe (7b) en rapprochant ledit navire de pose (2a) dudit élément de raccordement (11a) au fond de la mer, si nécessaire concomitamment à la descente additionnelle de dite conduite sous-marine depuis le navire de pose en surface, et
- à l'étape 4), on finalise le positionnement de ladite extrémité inférieure (1c) de la conduite, au regard dudit élément de raccordement (11a) situé à l'extrémité d'une autre conduite (11) supportée par une structure (10) ancrée au fond de la mer, et on réalise la connexion dudit élément de raccordement du type connecteur automatique à un élément de raccordement complémentaire (11a) de connecteur automatique situé à l'extrémité inférieure (1c) de ladite conduite.

5. Procédé selon la revendication 4, **caractérisé en ce que** :
- lesdites rames (2-1) sont assemblées par soudage bout à bout de 2 à 4 éléments unitaires de conduites de chacun 5 à 15 m, avec des diamètres extérieurs de conduites de 50mm à 600mm,
- la longueur L2 de ladite portion terminale (1-1b) de conduite correspond à une longueur de 1 à 10 éléments unitaires de conduite mis bout à bout rectilignement, de préférence une longueur L2 de 5 à 100m, de préférence encore de pas plus de 1 rame, et
- la longueur L0 de ladite première portion de conduite (1-1a) en position rectiligne, est d'une longueur de 150 à 1000 fois le diamètre extérieur de la conduite, correspondant à 1/5 à 1/2 de la profondeur du sol sous-marin, celle-ci étant d'au moins 1000m, de préférence au moins 1500m, et de préférence encore, L0 correspondant à la longueur de 2 à 20 rames mises bout à bout rectilignement.

6. Procédé selon la revendication 4 ou 5, **caractérisé en ce que** :
- lesdits moyens de guidage comprennent au moins une poulie (6-6), dont l'axe est solidaire de ladite conduite, et
- ledit moyen de blocage est constitué par un taquet bloqueur solidaire du câble situé à une longueur L1 dudit point de fixation lorsque la conduite est rectiligne, de préférence telle que la différence de longueur L0-L1, soit inférieure ou égale à 25% de ladite longueur L0, de préférence inférieure à 10% de ladite longueur L0.

7. Procédé selon l'une des revendication 4 à 6, **caractérisé en ce que** ladite conduite comprend ou coopère avec des premiers éléments de flottabilité (4a) au niveau de ladite portion terminale (1-1b) de conduite entre un dit point de fixation ou guidage (1b) et l'extrémité inférieure (1c) de la conduite de manière à compenser au moins le poids propre apparent dans l'eau de ladite portion terminale (1-1b) de conduite, de préférence lesdits premiers éléments de flottabilité (4a) répartis le long de ladite portion terminale uniformément, de sorte que de préférence encore, l'angle α₁ de la tangente (D1) à ladite conduite au niveau de son extrémité inférieure (1c) soit inférieur à 45°, de préférence encore inférieur à 30°.

8. Procédé selon la revendication 7, **caractérisé en ce que** ladite conduite comprend ou coopère en outre avec des éléments de flottabilité additionnels (3b,4b) aptes à créer une flottabilité positive d'une partie de ladite partie inférieure de conduite (1-1), ladite flottabilité positive F n'étant pas capable à elle seule d'engendrer la courbure de ladite première portion de conduite (1-1a) en l'absence de dit tensionnement P du câble à l'aide desdits moyens de tensionnement, ou d'augmenter ladite courbure en présence de dit tensionnement (P) à l'aide desdits moyens de tensionnement.

9. Procédé selon la revendication 8, **caractérisé en ce que** la conduite comprend des dits éléments de flottabilité additionnels (4b) aptes à créer une flottabilité positive répartis le long d'une partie de longueur (L3) de ladite première portion (1-1a) de conduite s'étendant à partir dudit point de fixation ou de guidage (1b) délimitant ladite première portion (1-1a) de conduite et ladite portion terminale (1-1b) de conduite, ladite flottabilité positive n'étant pas capable à elle seule d'engendrer ou d'augmenter la courbure de ladite première portion (1-1a) de conduite en l'absence ou respectivement en présence dudit tensionnement (P) du câble au niveau dudit point de guidage (1a).

10. Procédé selon la revendication 8 ou 9, **caractérisé en ce que** ladite conduite comprend ou coopère en outre avec un deuxième élément de flottabilité additionnel (3b) coopérant avec l'extrémité inférieure (1c) de la conduite apte à créer une flottabilité positive de la portion terminale (1-1b) de conduite en combinaison avec des premiers éléments de flottabilité (4a) s'étendant sensiblement sur toute la longueur (L2) de la portion terminale de conduite, ladite flottabilité positive étant capable à elle seule d'engendrer une courbure de ladite portion terminale (1-1b) de conduite de sorte que, de préférence l'angle α₁ de la tangente (D1) à ladite conduite au niveau de son extrémité inférieure (1c) soit inférieur à 45°, de préférence encore inférieur à 30°, mais ladite flottabilité positive, n'étant pas capable à elle seule d'engendrer ou d'augmenter la courbure de ladite première portion de conduite (1-1a) en l'absence de dit tensionnement (P) du câble (5) au niveau dudit point de guidage (1a).

11. Procédé selon l'une des revendications 4 à 10, **caractérisé en ce que**, après l'étape 4) on poursuit la dépose de la conduite au fond de la mer en réalisant les étapes supplémentaires suivantes dans lesquelles :
5) on éloigne progressivement le navire de pose (2) de ladite structure (10) ancrée au fond de la mer, d'une longueur supérieure à la longueur de chaque rame additionnelle que l'on descend au niveau de la tour de pose (2a), de préférence d'une longueur de 150% de la longueur de dite rame additionnelle, de manière à créer une inclinaison de la conduite en surface d'un angle ß de pas plus de 10° par rapport à sa position préalable verticale en fin d'étape 3) ,puis
6) on continue la descente de nouvelles rames additionnelles (2-1) et le déplacement simultanée du navire en l'éloignant de ladite structure ancrée (10) au fond de la mer, d'une longueur sensiblement égale à la longueur de chaque dite rame additionnelle, que l'on descend de manière à conserver une dite inclinaison de la conduite en surface sensiblement d'un même dit angle ß de pas plus de 10°.

12. Procédé de dépose d'une conduite selon l'une des revendications 1 à 11, en combinaison avec les revendications 3 et 6, **caractérisé en ce que** l'on met en oeuvre un dit moyen de tensionnement qui est un corps mort ou poids (6-1) de forme profilée fixé à une extrémité (5-1) dudit câble, de préférence de forme conique, dans sa partie inférieure (6-1a) de manière à permettre qu'elle puisse se planter dans le sol (20) lorsqu'au cours de la pose de la conduite elle rencontre le sol, et aussi profilée dans sa partie supérieure (6-1b), de manière à empêcher que ladite conduite puisse rester bloquée par-dessus ledit corps mort et que ladite conduite ne puisse pas alors se déposer horizontalement sur le sol marin, lorsque ladite partie inférieure (6-1a) du corps mort (6-1) est plantée dans le sol (20).

13. Conduite sous-marine comprenant un dispositif de courbure utile pour la dépose d'une conduite sous-marine au fond de la mer depuis un navire de pose en surface selon un procédé selon l'une des revendications 4 à 12, **caractérisé en ce qu'**elle comprend un dit dispositif de courbure d'une première portion (1-1a) de conduite sous-marine s'étendant entre deux dits points de fixation ou guidage (1a,1b), ledit dispositif de courbure comprenant au moins un câble (5) et des moyens de tensionnement (6-1 à 6-5) dudit câble entre les dits deux points de fixation ou guidage (1a,1b), ledit câble ou lesdits moyens de tensionnement comprenant ou coopérant avec au moins un dit moyen de blocage (6-8), lesdits deux points de fixation ou guidage (1a,16) étant espacés d'une longueur maximale L0 lorsque ladite première portion (1-1a) de ligne est en position rectiligne.

14. Conduite selon la revendication 13, **caractérisée en ce que** ledit câble (5) est fixé à une extrémité (5-2) à un premier gousset solidaire de ladite conduite sous-marine au niveau d'un dit point de fixation (1b), ledit point de fixation (1b) étant situé à une distance L2 de l'extrémité inférieure (1c) de la conduite sous-marine lorsque la portion terminale (1-1b) de la conduite sous-marine s'étendant entre ladite extrémité inférieure (1c) et ledit point de fixation (1b) est rectiligne, et ledit câble (5) passe par des moyens de guidage de câble (6-6 , 6-7) solidaires de ladite conduite sous-marine au niveau d'un point de guidage ( 1a) , ledit point de guidage (1a) étant situé à une distance L0 dudit point de fixation (1b) lorsque la première portion (1-1a) de la conduite sous-marine s'étendant entre ledit point de guidage (1a) et ledit point de fixation (1b) est rectiligne, et ledit câble coopérant avec des éléments de tensionnement (6-1,6-2) comprenant un élément de flottabilité (6-2) ou un poids ou corps mort (6-1), coopérant avec l'autre extrémité (5-1) dudit câble et y exerçant une tension d'intensité (P).

15. Conduite selon la revendication 13 ou 14, **caractérisée en ce que** la conduite comprend ou coopère avec des éléments de flottabilité (4a,3b) au niveau de sa dite portion terminale (1-1b) de conduite, lesdits éléments de flottabilité (4a,3b) étant constitués par des éléments de flottabilité périphériques et coaxiaux se présentant sous forme de bouées de préférence régulièrement espacées les unes des autres de manière à compenser au moins le poids propre apparent dans l'eau de ladite portion terminale (1-1b) de conduit de longueur L2, et de préférence, en outre des éléments de flottabilité (4b) aptes à créer une flottabilité positive sur une partie de longueur (L3) de ladite première portion (1-1a) de conduite s'étendant à partir dudit point de fixation ou guidage (1b) délimitant les portion terminale (1-1b) et première portion (1-1a) de conduite, ladite flottabilité positive n'étant pas capable à elle seule d'engendrer ou d'augmenter la courbure de ladite première portion de conduite en l'absence ou respectivement en présence dudit tensionnement (P) du câble, à l'aide desdits moyens de tensionnement.

## Patentansprüche

1. Verfahren zum Ablegen einer Unterwasserleitung (1) am Meeresgrund (20) von der Oberfläche (30) aus, um deren unteres Ende (1c) mit einem Verbindungselement (11a) am Meeresgrund zu verbinden, **dadurch gekennzeichnet, dass** die Schritte durchgeführt werden, bei denen:
1) die hängende Unterwasserleitung von der Oberfläche (30) aus in im Wesentlichen vertikale Position (7) gebracht wird, wobei ihr unteres Ende (1 c) in einer Höhe HO oberhalb des Meeresgrunds (20) gelegen ist, wobei die Unterwasserleitung in ihrem unteren Teil (1-1) eine Vorrichtung zum Krümmen eines ersten Unterwasserleitungsabschnitts (1-1 a), der zwischen zwei als Fixier- oder Führungsstellen bezeichneten Stellen (1a, 1 b) der Unterwasserleitung verläuft, umfasst, wobei die Krümmungsvorrichtung wenigstens ein Seil (5) sowie Mittel zum Spannen (6-1 bis 6-5) des Seils zwischen den beiden Fixier- oder Führungsstellen (1a, 1 b), im Bereich derer die Unterwasserleitung durch Fixieren bzw. durch Führen fest mit dem Seil verbunden ist, umfasst, wobei die Spannmittel (6-1 bis 6-5) geeignet sind, die beiden Fixier- oder Führungsstellen (1a, 1 b) dadurch zu nähern, dass die sich zwischen den beiden Fixier- oder Führungsstellen (1a, 1 b) erstreckende Seillänge von einer maximalen Länge L0 bis auf einen vorgegebenen unteren Grenzwert L1 verringert wird, wobei das Seil oder die Spannmittel wenigstens ein Blockiermittel (6-8), das geeignet ist, das Verringern der Länge des zwischen den beiden Fixier- oder Führungsstellen (1a, 1 b) gespannten Seils unter einen vorgegebenen unteren Grenzwert L1 zu verhindern, umfassen oder mit diesem zusammenwirken, wobei die beiden Fixier- oder Führungsstellen (1a, 1 b) um eine maximale Länge L0 beabstandet sind, wenn der erste Unterwasserleitungsabschnitt (1-1 a) sich in geradliniger Position befindet, und
2) das untere Ende (1c) der Unterwasserleitung bewegt wird, vorzugsweise mit Hilfe eines gesteuerten Unterwasserroboters (12), weiterhin vorzugsweise vom Typ ROV, derart, dass das untere Ende (1 c) der Unterwasserleitung sich von seiner Ausgangsposition des Schrittes 1), bei dem die Leitung sich in vertikaler Position befand, entfernt, wobei die Spannmittel eine kontrollierte Krümmung (7b) des ersten Unterwasserleitungsabschnitts (1-1a) durch Nähern der beiden Fixier- oder Führungsstellen (1a, 1 b) erzeugt, wobei die Krümmung des ersten Unterwasserleitungsabschnitts (1-1a) dadurch begrenzt ist, dass die Verringerung der Länge der Leine, die durch das zwischen den beiden Fixier- oder Führungsstellen (1a, 1b) gespannte Seil gebildet ist, nicht unter den vorgegebenen unteren Grenzwert L1 abnehmen kann, und
3) falls erforderlich die Unterwasserleitung (1), deren erster Abschnitt (1-1a) eine gebogene Form (7b) aufweist, dadurch bewegt wird, dass sie gleichzeitig mit dem zusätzlichen Herablassen der Leitung von der Oberfläche (30) aus, dem Meeresgrund (20) genähert wird, anschließend
4) das Positionieren des unteren Endes (1 c) der Leitung gegenüber dem Verbindungselement (11a) am Meeresgrund abgeschlossen wird und das Verbinden des unteren Endes (1c) der Leitung mit dem Verbindungselement (11a) vollzogen wird.

2. Verfahren nach Anspruch 1, **dadurch gekennzeichnet, dass** die Spannmittel wenigstens eines der 3 folgenden Spannmittel umfassen:
a) einen Ankerblock (6-1) oder ein Auftriebselement (6-2), der/das an einem Ende (5-1) des Seils befestigt oder damit verbunden ist, wobei das Seil (5) in diesem Fall zwischen seinen beiden Enden (5-1, 5-2) durch Führungsmittel (6-6, 6-7) geführt wird, die im Bereich von einer der beiden Fixier- oder Führungsstellen (1 a, 1 b), die eine Führungsstelle (1 a) des Seils an der Leitung ist, mit der Leitung fest verbunden sind, wobei das andere Ende (5-2) des Seils an der anderen Fixier- oder Führungsstelle, die eine Fixierstelle (1 b) ist, befestigt oder damit verbunden ist, und wobei vorzugsweise das Seil ein Blockiermittel (6-8), das von einem mit dem Seil fest verbundenen Blockieranschlag gebildet ist, umfasst, wobei der Blockieranschlag wenigstens eines der Führungsmittel (6c-5) nicht durchlaufen kann, und
b) eine Winde (6-3), die an wenigstens einer der beiden Fixier- oder Führungsstellen (1a, 1 b) an der Unterwasserleitung befestigt oder damit verbunden ist, Winde (6-3), auf die das Seil von wenigstens einem seiner Enden (5-2) aus, an dem es an der Winde befestigt ist, aufgewickelt werden kann, und wobei vorzugsweise das Seil ein Blockiermittel (6-8) umfasst, das von einem mit dem Seil fest verbundenen Blockieranschlag gebildet ist, der das zusätzliche Wickeln des Seils um die Winde verhindert, und
c) einen Zylinder (6-4), der an wenigstens einer der beiden Fixier- oder Führungsstellen (1a, 1 b) an der Unterwasserleitung befestigt oder damit verbunden ist, umfassend eine Zylinderstange (6-5), von welcher ein Ende an wenigstens einem Ende (5-2) des Seils befestigt oder damit verbunden ist, wobei vorzugsweise die Zylinderstange (6-5) sich lediglich um einen maximalen Weg gleich L0-L1 bewegen kann.

3. Verfahren nach Anspruch 1 oder 2, **dadurch gekennzeichnet, dass**:
- das Seil (5) an einem Ende (5-2) an einem Winkelblech (5a) befestigt ist, das im Bereich einer Fixierstelle (1b), welche den ersten Abschnitt (1-1a) und den Endabschnitt (1-1 b) des unteren Teils (1-1) der Unterwasserleitung begrenzt, mit der Leitung fest verbunden ist, und das Seil (5) zwischen diesen beiden Enden (5-1, 5-2) über Seilführungsmittel (6-6, 6-7) läuft, die im Bereich einer Führungsstelle (1a) an der Unterwasserleitung fest mit der Unterwasserleitung verbunden sind, wobei das andere Ende (5-1) des Seils mit Spannmitteln (6-1, 6-2), welche ein Auftriebselement (6-2) oder ein(en) Gewicht oder Ankerblock (6-1) umfassen, zusammenwirkt, die an dem anderen Ende eine Spannung mit der Stärke (P) ausüben, und
- bei Schritt 2) das untere Ende (1 c) der Unterwasserleitung derart bewegt wird, dass eine kontrollierte Krümmung (7b) des zwischen der Fixierstelle (1 b) an der Leitung und der Führungsstelle (1a) an der Leitung gelegenen ersten Abschnitts (1-1a) der Unterwasserleitung dadurch erzeugt wird, dass:
- die Spannelemente (6-1, 6-2) eine Spannung (P) mit einer Stärke ausüben, die geeignet ist, das Seil (5) zu spannen und eine Krümmung des ersten Abschnitts (1-1a) der Unterwasserleitung zu erzeugen, wenn das untere Ende (1c) der Unterwasserleitung von seiner Ausgangsposition des Schrittes 1), bei dem die Leitung sich in vertikaler Position befand, entfernt wird, und
- das Seil (5) ein Blockiermittel (6-8), das das Verringern der Länge der Leine, welche durch das zwischen der Fixierstelle (1 b) und der Führungsstelle (1a) gespannte Seil gebildet ist, unter einen vorgegebenen Längengrenzwert L1 verhindert, umfasst oder mit diesem zusammenwirkt, wodurch die aus dem Spannen resultierende Krümmung des ersten Leitungsabschnitts (1-1 a) zwischen der Fixierstelle (1 b) und der Führungsstelle (1a) begrenzt wird.

4. Verfahren nach einem der Ansprüche 1 bis 3, **dadurch gekennzeichnet, dass**:
- die Unterwasserleitung eine Unterwasserrohrleitung aus Stahl ist, die aus Strängen (2-1) besteht, welche in einem Verlegeturm (2a) eines Überwasser-Verlegeschiffes (2), von dem aus das Ablegen der Unterwasserrohrleitung auf dem Meeresgrund vollzogen wird, in Position stumpf aneinander geschweißt werden, und
- bei Schritt 2) das untere Ende (1 c) der Unterwasserleitung mit Hilfe eines gesteuerten Unterwasserroboters (12), weiterhin vorzugsweise vom Typ ROV, bewegt wird,
- wobei die Krümmung des ersten Unterwasserrohrleitungsabschnitts zwischen den beiden Fixier- oder Führungsstellen derart begrenzt ist, dass der Krümmungsradius der Rohrleitung über einem Grenzwert bleibt, der einer maximalen Spannung unter der Elastizitätsgrenze des Stahls des ersten Rohrleitungsabschnitts entspricht, wobei vorzugsweise die Krümmung derart ist, dass der Winkel α₂ der Tangente D2 der Rohrleitung im Bereich der Fixierstelle (1b) kleiner als 45°, vorzugsweise kleiner als 30° ist, und
- bei Schritt 3) die Unterwasserrohrleitung, deren erster Abschnitt (1-1a) eine gebogene Form (7b) aufweist, dadurch bewegt wird, dass das Verlegeschiff (2a) dem Verbindungselement (11a) am Meeresgrund genähert wird, falls erforderlich gleichzeitig mit dem zusätzlichen Herablassen der Unterwasserrohrleitung von dem Überwasser-Verlegeschiff aus, und
- bei Schritt 4) das Positionieren des unteren Endes (1c) der Rohrleitung gegenüber dem Verbindungselement (11a), das sich am Ende einer durch eine am Meeresgrund verankerte Struktur (10) getragenen weiteren Rohrleitung (11) befindet, abgeschlossen wird und das Verbinden des Verbindungselements vom Typ automatischer Verbinder mit einem ergänzenden Verbindungselement (11a) eines automatischen Verbinders, das sich am unteren Ende (1c) der Rohrleitung befindet, vollzogen wird.

5. Verfahren nach Anspruch 4, **dadurch gekennzeichnet, dass**:
- die Stränge (2-1) durch Stumpfschweißen von 2 bis 4 Rohrleitungseinzelelementen von jeweils 5 bis 15 m, mit Rohrleitungsaußendurchmessern von 50 mm bis 600 mm aneinandergefügt werden,
- die Länge L2 des Rohrleitungsendabschnitts (1-1b) einer Länge von 1 bis 10 geradlinig aneinander gefügten Rohrleitungseinzelelementen entspricht, vorzugsweise einer Länge L2 von 5 bis 100 m, weiterhin vorzugsweise von nicht mehr als 1 Strang, und
- die Länge L0 des ersten Rohrleitungsabschnitts (1-1 a) in geradliniger Position von einer Länge ist, die das 150- bis 1000-fache des Außendurchmessers der Rohrleitung ist, was 1/5 bis 1/2 der Tiefe des Meeresbodens entspricht, wobei diese wenigstens 1000 m, vorzugsweise wenigstens 1500 m beträgt, und wobei weiterhin vorzugsweise L0 der Länge von 2 bis 20 geradlinig aneinander gefügten Strängen entspricht.

6. Verfahren nach Anspruch 4 oder 5, **dadurch gekennzeichnet, dass**:
- die Führungsmittel wenigstens eine Rolle (6-6) umfassen, deren Achse mit der Rohrleitung fest verbunden ist, und
- das Blockiermittel von einem mit dem Seil fest verbundenen Blockieranschlag gebildet ist, der, wenn die Rohrleitung geradlinig ist, in einer Länge L1 von der Fixierstelle gelegen ist, die vorzugsweise derart ist, dass die Längendifferenz L0-L1 weniger als oder gleich 25% der Länge L0, vorzugsweise weniger als 10 % der Länge L0 beträgt.

7. Verfahren nach einem der Ansprüche 4 bis 6, **dadurch gekennzeichnet, dass** die Rohrleitung erste Auftriebselemente (4a) im Bereich des Rohrleitungsendabschnitts (1-1 b) zwischen einer Fixier- oder Führungsstelle (1 b) und dem unteren Ende (1 c) der Rohrleitung umfasst oder damit zusammenwirkt, um wenigstens das scheinbare Eigengewicht im Wasser des Rohrleitungsendabschnitts (1-1 b) zu kompensieren, vorzugsweise die ersten Auftriebselemente (4a) entlang des Endabschnitts gleichmäßig verteilt sind, so dass weiterhin vorzugsweise der Winkel α₁ der Tangente (D1) an die Leitung im Bereich ihres unteren Endes (1 c) kleiner als 45°, weiterhin vorzugsweise kleiner als 30° ist.

8. Verfahren nach Anspruch 7, **dadurch gekennzeichnet, dass** die Rohrleitung ferner zusätzliche Auftriebselemente (3b, 4b), die geeignet sind, einen positiven Auftrieb eines Teils des unteren Rohrleitungsteils (1-1) zu erzeugen, umfasst oder damit zusammenwirkt, wobei der positive Auftrieb F allein nicht in der Lage ist, die Krümmung des ersten Rohrleitungsabschnitts (1-1 a) zu erzeugen, wenn kein Spannen P des Seils mit Hilfe der Spannmittel stattfindet, oder die Krümmung zu vergrößern, wenn ein Spannen (P) mit Hilfe der Spannmittel stattfindet.

9. Verfahren nach Anspruch 8, **dadurch gekennzeichnet, dass** die Rohrleitung zusätzliche Auftriebselemente (4b), welche geeignet sind, einen positiven Auftrieb zu erzeugen, umfasst, die entlang eines Längenteils (L3) des ersten Rohrleitungsabschnitts (1-1a), der sich von der den ersten Rohrleitungsabschnitt (1-1a) und den Rohrleitungsendabschnitt (1-1b) begrenzenden Fixier- oder Führungsstelle (1 b) aus erstreckt, verteilt sind, wobei der positive Auftrieb allein nicht in der Lage ist, die Krümmung des ersten Rohrleitungsabschnitts (1-1a) zu erzeugen oder zu vergrößern, wenn kein Spannen bzw. ein Spannen (P) des Seils im Bereich der Führungsstelle (1a) stattfindet.

10. Verfahren nach Anspruch 8 oder 9, **dadurch gekennzeichnet, dass** die Rohrleitung ferner ein zweites zusätzliches, mit dem unteren Ende (1c) der Rohrleitung zusammenwirkendes Auftriebselement (3b) umfasst oder damit zusammenwirkt, das geeignet ist, in Kombination mit ersten Auftriebselementen (4a), die sich im Wesentlichen über die gesamte Länge (L2) des Rohrleitungsendabschnitts erstrecken, einen positiven Auftrieb des Rohrleitungsendabschnitts (1-1b) zu erzeugen, wobei der positive Auftrieb allein in der Lage ist, eine Krümmung des Rohrleitungsendabschnitts (1-1 b) zu erzeugen, so dass vorzugsweise der Winkel α₁ der Tangente (D1) an die Rohrleitung im Bereich ihres unteren Endes (1c) kleiner als 45°, weiterhin vorzugsweise kleiner als 30° ist, wobei aber der positive Auftrieb allein nicht in der Lage ist, die Krümmung des ersten Rohrleitungsabschnitts (1-1 a) zu erzeugen oder zu vergrößern, wenn kein Spannen (P) des Seils (5) im Bereich der Führungsstelle (1a) stattfindet.

11. Verfahren nach einem der Ansprüche 4 bis 10, **dadurch gekennzeichnet, dass** nach Schritt 4) das Ablegen der Rohrleitung auf dem Meeresgrund durch Durchführen der folgenden zusätzlichen Schritte vollzogen wird, bei denen:
5) das Verlegeschiff (2) von der am Meeresgrund verankerten Struktur (10) um eine Länge größer als die Länge eines jeden zusätzlichen Strangs, der im Bereich des Verlegeturms (2a) herabgelassen wird, schrittweise entfernt wird, vorzugsweise um eine Länge von 150 % der Länge eines zusätzlichen Strangs, so dass eine Neigung der Rohrleitung an der Oberfläche um einen Winkel β von nicht mehr als 10° gegenüber ihrer vorherigen vertikalen Position am Ende von Schritt 3) erzeugt wird, anschließend
6) das Herablassen von neuen zusätzlichen Strängen (2-1) sowie das gleichzeitige Bewegen des Schiffes fortgesetzt werden, indem dieses von der am Meeresgrund verankerten Struktur (10) um eine Länge im Wesentlichen gleich der Länge eines jeden zusätzlichen Strangs, der so herabgelassen wird, dass eine Neigung der Rohrleitung an der Oberfläche im Wesentlichen um einen gleichen Winkel β von nicht mehr als 10° beibehalten wird, entfernt wird.

12. Verfahren zum Ablegen einer Rohrleitung nach einem der Ansprüche 1 bis 11, in Kombination mit den Ansprüchen 3 und 6, **dadurch gekennzeichnet, dass** ein Spannmittel verwendet wird, das ein an einem Ende (5-1) des Seils befestigter/s Ankerblock oder Gewicht (6-1) mit profilierter Form ist, der/das in seinem unteren Teil (6-1 a) vorzugsweise eine Kegelform aufweist, um zu ermöglichen, dass es sich in den Boden (20) bohren kann, wenn es im Laufe des Verlegens der Rohrleitung auf den Boden trifft, und auch in seinem oberen Teil (6-1 b) profiliert ist, um zu verhindern, dass die Rohrleitung über dem Ankerblock blockiert bleiben kann und dass sich die Rohrleitung dann nicht horizontal auf dem Meeresboden ablegen kann, wenn das untere Teil (6-1 a) des Ankerblocks (6-1) in den Boden (20) gesteckt ist.

13. Unterwasserrohrleitung, umfassend eine Krümmungsvorrichtung, die für das Ablegen einer Unterwasserrohrleitung auf dem Meeresgrund von einem Überwasser-Verlegeschiff aus nach einem Verfahren gemäß einem der Ansprüche 4 bis 12 nützlich ist, **dadurch gekennzeichnet, dass** sie eine Vorrichtung zum Krümmen eines ersten Unterwasserrohrleitungsabschnitts (1-1a), welcher sich zwischen zwei Fixier- oder Führungsstellen (1a, 1b) erstreckt, umfasst, wobei die Krümmungsvorrichtung wenigstens ein Seil (5) sowie Mittel zum Spannen (6-1 bis 6-5) des Seils zwischen den beiden Fixier- oder Führungsstellen (1 a, 1 b) umfasst, wobei das Seil oder die Spannmittel wenigstens ein Blockiermittel (6-8) umfassen oder damit zusammenwirken, wobei die beiden Fixier- oder Führungsstellen (1a, 1 b) um eine maximale Länge L0 beabstandet sind, wenn der erste Leitungsabschnitt (1-1a) sich in geradliniger Position befindet.

14. Rohrleitung nach Anspruch 13, **dadurch gekennzeichnet, dass** das Seil (5) an einem Ende (5-2) an einem ersten Winkelblech, das im Bereich einer Fixierstelle (1 b) fest mit der Unterwasserrohrleitung verbunden ist, befestigt ist, wobei die Fixierstelle (1 b) in einem Abstand L2 von dem unteren Ende (1c) der Unterwasserrohrleitung gelegen ist, wenn der Endabschnitt (1-1b) der Unterwasserrohrleitung, der sich zwischen dem unteren Ende (1c) und der Fixierstelle (1 b) erstreckt, geradlinig ist, und das Seil (5) über Seilführungsmittel (6-6, 6-7) läuft, die im Bereich einer Führungsstelle (1a) fest mit der Unterwasserrohrleitung verbunden sind, wobei die Führungsstelle (1a) in einem Abstand L0 von der Fixierstelle (1 b) gelegen ist, wenn der erste Abschnitt (1-1a) der Unterwasserrohrleitung, der sich zwischen der Führungsstelle (1a) und der Fixierstelle (1 b) erstreckt, geradlinig ist, und wobei das Seil mit Spannelementen (6-1, 6-2) zusammenwirkt, die ein Auftriebselement (6-2) oder ein(en) Gewicht oder Ankerblock (6-1) umfassen, das/der mit dem anderen Ende (5-1) des Seils zusammenwirkt und dort eine Spannung mit der Stärke (P) ausübt.

15. Rohrleitung nach Anspruch 13 oder 14, **dadurch gekennzeichnet, dass** die Rohrleitung Auftriebselemente (4a, 3b) im Bereich ihres Rohrleitungsendabschnitts (1-1 b) umfasst oder damit zusammenwirkt, wobei die Auftriebselemente (4a, 3b) durch umfangseitige und koaxiale Auftriebselemente, welche in Form von Bojen vorliegen, gebildet sind, die vorzugsweise gleichmäßig voneinander beabstandet sind, um wenigstens das scheinbare Eigengewicht im Wasser des Rohrleitungsendabschnitts (1-1b) mit der Länge L2 zu kompensieren, sowie vorzugsweise ferner Auftriebselemente (4b), die geeignet sind, einen positiven Auftrieb an einem Teil mit der Länge (L3) des ersten Rohrleitungsabschnitts (1-1 a) zu erzeugen, der sich von der Fixier- oder Führungsstelle (1 b) aus erstreckt, welche den Endabschnitt (1-1b) und ersten Abschnitt (1-1 a) der Rohrleitung begrenzt, wobei der positive Auftrieb allein nicht in der Lage ist, die Krümmung des ersten Rohrleitungsabschnitts zu erzeugen oder zu vergrößern, wenn kein Spannen bzw. ein Spannen (P) des Seils mit Hilfe der Spannmittel stattfindet.

## Claims

1. A method of laying an undersea line (1) at the bottom (20) of the sea from the surface (30) in order to connect the bottom end (1a) thereof to a coupling element (11a) at the sea bottom, the method being **characterized in that** the following steps are performed:
1) said undersea line is positioned so as to be suspended from the surface (30) in a substantially vertical position (7), its bottom end (1c) being situated at a height H0 above the sea bottom (20), said undersea line having in its bottom segment (1-1) a curving device for curving a first portion (1-1a) of the undersea line extending between two points (1a, 1b) of said undersea line that are referred to as fastening or guide points, said curving device comprising at least one cable (5) and tensioning means (6-1 to 6-5) for tensioning said cable between said two fastening or guide points (1a, 1b) where said undersea line is secured to said cable by fastening or respectively by guidance, said tensioning means (6-1 to 6-5) being suitable for moving said two fastening or guide points (1a, 1b) towards each other by reducing the length of the cable extending between the two said fastening or guide points (1a, 1b) from a maximum length L0 to a given shorter limit value L1, said cable or said tensioning means comprising or co-operating with at least one blocking means (6-8) suitable for preventing the reduction in the length of the cable tensioned between said two fastening or guide points (1a, 1b) below a said given shorter limit value L1, said two fastening or guide points (1a, 1b) being spaced apart by a maximum length L0 when said first undersea line portion (1-1a) is in a rectilinear position; and
2) the bottom end (1c) of said undersea line is moved, preferably with the help of a controlled undersea robot (12) more preferably of the ROV type, so that the bottom end (1c) of said undersea line moves away from its initial position of step 1) in which said line was in a vertical position, said tensioning means creating controlled curvature (7b) of said first undersea line portion (1-1a) by moving said two fastening or guide points (1a, 1b) towards each other, said curvature of the first undersea line portion (1-1a) being limited as the result of the reduction in the length of the chord formed by the tensioned cable between said two fastening or guide points (1a, 1b) being incapable of going below said given shorter limit value L1; and
3) if necessary, moving said undersea line (1), having its first portion (1-1a) including a said curved shape (7b), closer to the sea bottom (20) by lowering an additional length of said line from the surface (30); and then
4) the positioning of said bottom end (1c) of the line is finalized relative to said coupling element (11a) at the sea bottom, and the bottom end (1c) of said line is connected to said coupling element (11a).

2. A method according to claim 1, **characterized in that** said tensioning means comprise at least one of the three following tensioning means:
a) a deadman (6-1) or a buoyancy element (6-2) fastened or connected to one end (5-1) of said cable, said cable (5) then being guided between its two ends (5-1, 5-2) by guide means (6-6, 6-7) secured to said line at one of said fastening or guide points (1a, 1b) that is a point (1a) for guiding said cable on said line, the other end (5-2) of said cable being fastened or connected to the other fastening or guide point, which is a fastening point (1b), and said cable preferably including a said blocking means (6-8) constituted by a blocking cleat secured to the cable, said blocking cleat not being capable of passing through at least one of said guide means (6c-5); and
b) a winch (6-3) fastened or connected to the undersea line at at least one of said two fastening or guide points (1a, 1b), on which winch (6-3) said cable can be wound from at least one of its ends (5-2) whereby it is fastened to the winch, and said cable preferably including a said blocking means (6-8) constituted by a blocking cleat secured to the cable and preventing additional cable being wound around said winch; and
c) an actuator (6-4) fastened or connected to the undersea line at at least one of said two fastening or guide points (1a, 1b), the actuator having an actuator rod (6-5) having one end fastened or connected to at least one end (5-2) of said cable, said actuator rod (6-5) preferably being incapable of moving through more than a maximum distance equal to L0-L1.

3. A method according to claim 1 or claim 2, **characterized in that**:
• said cable (5) is fastened at one end (5-2) to a gusset (5a) secured to said line at a said fastening point (1b) defining said first portion (1-1a) and the terminal segment (1-1b) of the bottom portion (1-1) of the undersea line, and said cable (5) passes between its two ends (5-1, 5-2) via cable guide means (6-6, 6-7) secured to said undersea line at a guide point (1a) on said undersea line, the other end (5-1) of said cable co-operating with tensioning elements (6-1, 6-2) comprising a buoyancy element (6-2) or a weight or deadman (6-1), exerting a tension of magnitude P at said other end; and
• in step 2), the bottom end (1c) of said undersea line is moved so as to create controlled curvature (7b) of the first undersea line portion (1-1a) lying between said fastening point (1b) on the line and said guide point (1a) on the line as a result:
• said tensioning elements (6-1, 6-2) exert a tension P of magnitude suitable for tensioning said cable (5) and for curving said first undersea line portion (1-1a) when the bottom end (1c) of said undersea line is moved away from its initial position of step 1) in which said line was in a vertical position; and
• said cable (5) includes or co-operates with blocking means (6-8) preventing the length of said chord formed by the cable tensioned between the fastening point (1b) and said guide point (1a) decreasing below a given limit value of length L1, thereby limiting the curvature of said first line portion (1-1a) between the fastening point (1b) and said guide point (1a) as a result of said tensioning.

4. A method according to any one of claims 1 to 3, **characterized in that**:
• said undersea line is an undersea pipe of steel made up of strings (2-1) assembled to one another by end-to-end welding while in position in a laying tower (2a) of a laying ship (2) at the surface, from which said undersea pipe is laid on the sea bottom; and
• in step 2), the bottom end (1c) of said undersea line is moved with the help of a controlled undersea robot (12), more preferably of the ROV type; and
• said curvature of said first undersea pipe portion between the two said fastening or guide points being limited so that the radius of curvature of said pipe remains greater than a limit value corresponding to a maximum stress below the elastic limit of the steel of said first pipe portion, said curvature preferably being such that the angle α₂ of the tangent D2 of the pipe at said fastening point (1b) is less than 45°, and preferably less than 30°; and
• in step 3), said undersea pipe in which said portion (1-1a) has a curved shape (7b) is moved by moving said laying ship (2a) closer to said coupling element (11a) on the sea bottom, if necessary while also lowering an additional length of said undersea pipe from the laying ship on the surface; and
• in step 4), the positioning of said bottom end (1c) of the pipe is finalized relative to said coupling element (11a) situated at the end of another pipe (11) supported by a structure (10) anchored to the sea bottom, and said coupling element of the automatic connector type is connected to a complementary automatic connector coupling element (11a) situated at the bottom end (1c) of said pipe.

5. A method according to claim 4, **characterized in that**:
• said strings (2-1) are assembled by end-to-end welding two to four unit pipe elements each having a length of 5 m to 15 m, with outside pipe diameters lying in the range 50 mm to 600 mm;
• the length L2 of said terminal pipe portion (1-1b) corresponds to a length of one to ten unit pipe elements placed end-to-end in a straight line, preferably having a length L2 lying in the range 5 m to 100 m, more preferably not more than one string; and
• the length L0 of said first pipe portion (1-1a) in a rectilinear position lies in the range 150 to 1000 times the outside diameter of the pipe, corresponding to 1/5 to 1/2 of the depth of the undersea ground, which depth is at least 1000 m, preferably at least 1500 m, and more preferably L0 corresponds to the length of two to twenty strings placed end-to-end in a straight line.

6. A method according to claim 4 or claim 5, **characterized in that**:
• said guide means comprise at least one sheave (6-6) of axis secured to said pipe; and
• said blocking means are constituted by a blocking cleat secured to the cable and situated at a length L1 from said fastening point when the pipe is rectilinear, preferably such that the difference in length L0-L1 is less than or equal to 25% of said length L0, and preferably less than 10% of said length L0.

7. A method according to any one of claims 4 to 6, **characterized in that** said pipe includes or co-operates with first buoyancy elements (4a) at said terminal pipe portion (1-1b) between a said fastening or guide point (1b) and the bottom end (1c) of the pipe in such a manner as to compensate at least the apparent weight in water of said terminal pipe portion (1-1b), said first buoyancy elements (4a) preferably being uniformly distributed along said terminal portion, such that, even more preferably, the angle α₁ of the tangent (D1) to said pipe at its bottom end (1c) is less than 45°, and more preferably less than 30°.

8. A method according to claim 7, **characterized in that** said pipe further includes or co-operates with additional buoyancy elements (3b, 4b) suitable for creating positive buoyancy over a fraction of said pipe bottom segment (1-1), said positive buoyancy F not being capable on its own of causing said first pipe portion (1-1a) to curve in the absence of said tensioning P of the cable with the help of said tensioning means, or of increasing said curvature in the presence of said tensioning P with the help of said tensioning means.

9. A method according to claim 8, **characterized in that** the pipe includes said additional buoyancy elements (4b) suitable for creating positive buoyancy distributed along a fraction of the length (L3) of said first pipe portion (1-1a) extending from said fastening or guide point (1b) defining said first and terminal pipe portions (1-1a, 1-1b), said positive buoyancy not being capable on its own of generating or increasing curvature of said first pipe portion (1-1a) in the absence of, or respectively in the presence of said tensioning P of the cable at said guide point (1a).

10. A method according to claim 8 or claim 9, **characterized in that** said pipe also includes or co-operates with a second additional buoyancy element (3b) co-operating with the bottom end (1c) of the pipe and suitable for creating positive buoyancy of the terminal pipe portion (1-1b) in combination with first buoyancy elements (4a) extending substantially over the entire length (L2) of the terminal pipe portion, said positive buoyancy being capable on its own of generating curvature of said terminal pipe portion (1-1b) in such a manner that the angle α₁ of the tangent (D1) to said pipe at its bottom end (1c) is preferably less than 45°, more preferably less than 30°, but said positive buoyancy is not capable on its own of generating or increasing the curvature of said first pipe portion (1-1a) in the absence of said tensioning P of the cable (5) at said guide point (1a).

11. A method according to any one of claims 4 to 10, **characterized in that**, after step 4), the pipe continues to be laid on the sea bottom by performing the following additional steps:
5) progressively moving the laying ship (2) away from said structure (10) anchored on the sea bottom through a length greater than the length of each additional string that is lowered from the laying tower (2a), preferably through a length equal to 150% of the length of said additional string, so as to create an angle of inclination β for the pipe at the surface that is not more than 10° relative to its previous vertical position at the end of the step 3), and then
6) continuing to lower new additional strings (2-1) while simultaneously moving the ship away from said structure (10) anchored on the sea bottom through a length substantially equal to the length of each said additional string, the strings being lowered in such a manner as to conserve a said angle of inclination β for the pipe at the surface that is substantially unchanged and not more than 10°.

12. A method of laying a pipe according to any one of claims 1 to 11, in combination with claims 3 and 6, the method being **characterized in that** a said tensioning means used is constituted by a deadman or weight (6-1) fastened to one end (5-1) of said cable, the bottom portion (6-1a) of the deadman or weight being of streamlined shape, and preferably of conical shape, so as to enable it to penetrate into the ground (20) when, during laying of the pipe, it comes into contact therewith, and its top portion (6-1b) also being streamlined, so as to prevent it being possible for said pipe to remain blocked on top of said deadman, which would prevent the pipe from being laid horizontally on the seabed, after said bottom portion (6-1a) of the deadman (6-1) has penetrated into the ground (20).

13. An undersea pipe including a curving device suitable for laying an undersea pipe on the sea bottom from a laying ship on the surface by means of a method according to any one of claims 4 to 12, the pipe being **characterized in that** it includes a said curving device for curving a first undersea pipe portion (1-1a) extending between two said fastening or guiding points (1a, 1b), said curving device comprising at least one cable (5) and tensioning means (6-1 to 6-5) for tensioning said cable between said two fastening or guide points (1a, 1b), said cable or said tensioning means including or co-operating with at least one said blocking means (6-8), said two fastening or guide points (1a, 1b) being spaced apart by a maximum length L0 when said first line portion (1-1a) is in a rectilinear position.

14. A pipe according to claim 13, **characterized in that** said cable (5) is fastened at one end (5-2) to a first gusset secured to said undersea pipe at a said fastening point (1b), said fastening point (1b) being situated at a distance L2 from the bottom end (1c) of the undersea pipe when the terminal portion (1-1b) of the undersea pipe extending between said bottom end (1c) and said fastening point (1b) is rectilinear, and said cable (5) passes via cable guide means (6-6, 6-7) secured to said undersea pipe at a guide point (1a), said guide point (1a) being situated at a distance L0 from said fastening point (1b) when said first portion (1-1a) of the undersea pipe extending between said guide point (1a) and said fastening point (1b) is rectilinear, and said cable co-operating with tensioning means (6-1, 6-2) including a buoyancy element (6-2) or a weight or deadman (6-1) co-operating with the other end (5-1) of said cable, and exerting thereon tension of magnitude P.

15. A pipe according to claim 13 or claim 14, **characterized in that** the pipe includes or co-operates with buoyancy elements (4a, 3b) at its said terminal pipe portion (1-1b), said buoyancy elements (4a, 3b) being constituted by peripheral and coaxial buoyancy elements in the form of buoys that are preferably regularly spaced apart from one another so as to compensate at least for the apparent weight in water of said terminal pipe portion (1-1b) of length L2, and preferably also buoyancy elements (4b) suitable for creating positive buoyancy over a fraction of length L3 of said first pipe portion (1-1a) extending from said fastening or guide point (1b) defining the terminal and first pipe portions (1-1b, 1-1a), said positive buoyancy being incapable on its own of giving rise to or increasing the curvature of said first pipe portion in the absence or respectively in the presence of said tensioning P of the cable with the help of said tensioning means.
